# EUROPEAN PATENT APPLICATION

(11) **EP 4 516 630 A1**
(43) Date of publication of application: **05.03.2025**
(21) Application number: 24198004.4
(22) Date of filing: 02.09.2024
(51) Int. Cl.: B62B 7/06, B62B 7/10, B62B 7/12, B62B 9/28

(54) **DEVICE USABLE AS A STROLLER BOARD AND AS AN INDEPENDENT RIDE-ON TOY**

(30) Priority: 03.09.2023 IL 30565323
(71) Applicant: Doona Holdings Ltd., Quarry Barry (HK)
(72) Inventor: MAZAR, Yoav, Quarry Bay (HK)
(74) Representative: Mewburn Ellis LLP

(57) **Abstract**

Described herein is a device configurable between a first mode in which the device can be connected to a stroller as a stroller board, and a second mode in which the device can be used as an independent ride-on toy. The device comprises a platform, at least two under-platform wheels at least indirectly connected to the underside portion of the platform, a connector engageable with a stroller, and a head member configurable between an operable state and a non-operable state, in which an elongate portion of the head member and the handlebars are located so as to least interfere with use of the device as a stroller board.

## Description

### TECHNOLOGICAL FIELD

This invention relates ride-on toys and stroller boards.

### BACKGROUND ART

References considered to be relevant as background to the presently disclosed subject matter are listed below:
- US 10829141B2
- US 10683025B2
- CN 204956797U
- CN 205801213U
- CN 209064267U
- CN 213323301U
- CN 216332519U
- CN 217945413U

Acknowledgement of the above references herein is not to be inferred as meaning that these are in any way relevant to the patentability of the presently disclosed subject matter.

### GENERAL DESCRIPTION

In accordance with a first aspect of the presently disclosed subject matter, there is provided a device for a child user, configurable between a first mode in which the device can be connected to a stroller as a stroller board, and a second mode in which the device can be used as an independent ride-on toy. The device comprises a platform connectable to a stroller at a first end of the platform in the first mode of the device, at least two under-platform wheels, and a head member adjacent to an opposite, second end of the platform, having handlebars usable in at least the second mode of the device, and a head member wheel. The under-platform wheels and the head member wheel are selectively operable to roll on a surface such that, in the second mode of the device, the under-platform wheels constitute rear wheels and the head member wheel constitutes a front wheel and, in the first mode of the device, the head member wheel constitutes a rear wheel, whilst the under-platform wheel may or may not be used.

The platform has an underside portion, an upper surface, and a symmetry axis oriented horizontally in both the first and second modes of the device such that the first and second platform ends are spaced along the symmetry axis. The under-platform wheels are connected to the platform so as to be disposed thereunder at least in the second mode of the device. Optionally, the under-platform wheels are at least indirectly connected to the underside portion of the platform.

The head member has an upper end, a lower end, and an elongate portion therebetween. The upper end is associated with handlebars and the lower end is associated with the head member wheel. In some embodiments, the head member wheel is held by a head member wheel holder associated with the lower end of the head member.

According to a second aspect of the presently disclosed subject matter, in the device according to the first aspect and/or any of the aspects described below, the head member is configurable between an operational state in which the elongate portion is oriented transversely to platform and, at least along a majority of its height, is located above a plane defined by the platform, so as to let the handlebars be accessible for use of the device in the second mode thereof; and a non-operational state, in which the location and orientation of at least the elongate portion are different from that in the operational state, and the handlebars as well as the elongate portion are located so as to least interfere with use of the device in the first mode. In some embodiments, at least a part of the head member is manipulable between an uprightly raised position in the operational state to a lowered position in the non-operational state. In some embodiments, when the head member is in the lowered position, at least a part of the elongate portion extends along the platform. In some embodiments, when the head member is in the lowered position, at least a part of the elongate portion and the handlebars are located under the platform, optionally, disposed parallel to the platform. In some embodiments, the device may further comprise a head member locking arrangement for selectively locking the head member in the operational state and/or in the non-operational state. In some embodiments, the head member is pivotable relative to the head member wheel holder, between the operational state and the non-operational state. In some embodiments, the non-operational state of the head member is characterized by that at least the elongate portion at least partially extends along the symmetry axis, for example when the head member is arranged in a parallel orientation with respect to the platform (e.g., underneath the platform).

In some embodiments, the head member is at least partially telescopic and can be extended to assume the uprightly raised position and contracted to assume the lowered position. Optionally, the length of the telescopic head member can be adjusted to adapt a height of the handlebars to the specific child user.

In some embodiments, the head member can be detachable from the device, for example with the aid of a connector configured at a lower end of the elongate portion of the head member which provides for a removable coupling of the head member.

In accordance with a third aspect of the presently disclosed subject matter, the device of the first and/or second aspect and/or any of the aspects described below, may comprise a bar attached at least indirectly to the underside of the platform. The bar extends along the symmetry axis along at least a majority thereof, and has a first bar end and a second bar end spaced along the symmetry axis. The first bar end is connectable at least indirectly to a stroller to allow the use of the device in the first mode.

In some embodiments, the bar is connectable to the stroller by means of a connector which can be integrally or unitarily formed with the bar or detachably and securely mountable thereto. The bar can be moveable along the symmetry axis to bring the connector between a first state in which the connector protrudes from the first platform end, and a second state in which the connector is located closer to the second platform end of the platform than in the first state, both as seen in a plan view of the device. Alternatively, or in addition to being connectable at least indirectly to a stroller, the bar can be connected at least indirectly to the head member, with a second bar end. When the head member wheel is held by the head member wheel holder, the head member can be connected to the second bar end by the head member wheel holder.

In some embodiments, the device further comprises a housing via which the bar is attached to the platform. The housing can be attached to, or integrally or unitarily formed with, the underside of the platform for holding the bar. In some embodiments, the housing has openings in the directions of the first and second platform ends, through which at least the respective first and second bar ends can protrude in the corresponding directions. In some embodiments, the bar is slidable with respect to the housing. In some embodiments, the bar is slidable with respect to the housing between at least two states, in one of which the second bar end with the head member is spaced further away from the second platform end then in the other state, along the symmetry axis.

In some embodiments, manipulation of the head member from the operable state to the non-operable state, e.g. by pivoting, also causes the bar to slide within its housing, allowing the connector associated with the first bar end to protrude outwardly from the platform, while at the same time reducing a space between the head member wheel holder and the platform, which was previously occupied by the bar that has now been pushed further under the platform. In some embodiments, pivoting of the head member is performed by the user (parent) by grasping onto the handlebars, and then rotating the head member in a circular motion, first away from the platform and then back under the platform, where the head member can be stored in its non-operable state. This movement can cause the bar to be pushed to slide within its housing, towards the other end of the platform.

When the head member is moveable between the operational state and the non-operational state, and the non-operational state of the head member is characterized by the elongate portion thereof at least partially extending along the symmetry axis and being disposed under the platform, the elongate portion of the head member can comprise a recess in which the housing is at least partially received when the head member is in the non-operational state.

In some embodiments of the device according to any of the above aspects, it may further comprise a seat unit for use at least in the second mode of the device so as to protrude upwardly from the platform. The seat unit can be integral with the platform or rather it can be selectively connectable thereto, e.g., by a quick-release mechanism. As referred to herein, a seat unit may include a seat unit which is comprised of multiple components (e.g., a seat, a connector for a seat, etc.), or, alternatively, a seat unit configured as a unitary body. Generally, the seat unit comprises a post extending from the upper surface of the platform, and a seat mounted thereon.

According to a further aspect of the presently disclosed subject matter, in the device according to any of the previous aspects and/or of the aspects described below, the platform can have such a shape as to be narrower at its part including the second platform end than at its part adjacent the first platform end. In some embodiments, the platform is narrow enough at least adjacent the second platform end so that when the device is used in the second mode, there are free spaces adjacent opposing sides of the narrow part of the platform and in front of the opposing parts of the wide part of the platform for a child user facing towards the head member and seating on a seat thereof, if any, or standing with one foot on the platform, to be able to step on the ground at locations corresponding to the above free spaces. The platform can further be wide enough at least adjacent the first end so that when the device is used in the first mode, the upper surface of the platform has sufficient area adjacent the first end for a child user to be able to put his/her feet on the platform closer to the first end than to the second end.

One manner in which the above can be achieved in a device according to any of the aspects described above and/or described below, is by having such shape of the platform that in at least a plan view of the device, at least when in its second mode, there are free spaces located externally to diagonal axes of which each diagonal axis extends between a center point of the seat (as seen in a plan view) and a respective end point of the wide portion of the platform which is farthest from the first platform end. These spaces are free of any device elements including the platform.

In some embodiments, the wide portion of the platform extends along at least 50% of a length of the platform as measured along the symmetry axis. In some embodiments, at least adjacent the second platform end, the narrow portion extends in a direction perpendicular to the symmetry axis no more than 50% of a length of the wide portion as measured along a direction perpendicular to the symmetry axis. In some embodiments, the narrow portion tapers in the direction of the second platform end. In some embodiments, the width of the wide portion of the platform, perpendicular to the symmetry axis, is at least 30 centimeters.

A platform having a geometry for example as described herein potentially contributes to the dual-use of the device in that in the stroller board mode the platform provides a large enough surface for the child user to place their feet on; and in the ride-on mode, the platform is narrow enough to enable the child user to step to the side of the platform and on the ground surface in the spaces formed, for propelling the device forwards.

It is noted that in some embodiments, a platform can be shaped otherwise, for example, as a "T"-shape with the upper portion of the "T" being adjacent the first end and being wide enough for accommodating the child's feet.

According to a further aspect of the presently disclosed subject matter, in a device according to any one or more of the aspects of the presently disclosed subject matter described above or below, the under-platform wheels are connected to the underside portion of the platform so as to be capable of being brought between an operational state, in which the lowermost points of the wheels define a reference plane of the device and in which the under-platform wheels can be rolled along a surface, e.g. a ground surface, in the second mode of the device, and a non-operational (storage) state, in which the under-platform wheels are located above the reference plane in the first mode of the device.

In some embodiments, the under-platform wheels are each connected to the platform via an under-platform wheel holder manipulable to move the wheel from an operational state in which it can roll on a surface into non-operational state, in which it is uncapable of such rolling. Thus, in some embodiments, the under-platform wheel holders can be manipulable between a lowered position, in which the under-platform wheels are in the operational state and are oriented vertically, and a raised position in which the wheels are in the non-operational state and have the same or different orientation compared with that in the operational state. In some embodiments, the under-platform wheel holders can be pivotable to change the orientation of the under-platform wheels from a vertical into a non-vertical orientation with respect to the platform. In some embodiments, a plane defined by each of the under-platform wheels when in the non-operational state, forms with the reference plane an angle of less than 90 degrees, optionally in the range of 0 - 45 degrees.

A potential advantage of the under-platform wheels being raised off the ground in the stroller-board mode is that the device becomes at least partially supported by the stroller itself (e.g. by the wheels of the stroller), which may provide for smoother movement of the attached stroller and device and for potentially improved maneuverability. In this manner of attachment, the device becomes a direct extension of the stroller, in which a distance between the stroller and the device is relatively small, thereby potentially reducing interference to an adult user (parent) pushing the stroller when the device is attached to it.

In some embodiments, a support member can be provided for each under-platform wheel holder, which is connected at one end thereof to the under-platform wheel holder and at the other end - to the underside portion of the platform, and which is moveable or foldable to allow the above movement of the under-platform wheel holder. In some embodiments, the support member provides diagonal support for maintaining the wheel in the operational state, for example, in the vertical orientation with respect to the platform, and may prevent undesired pivoting of the wheel into the non-operational state.

In some embodiments, the under-platform wheels when in their non-operational state in the first mode of the device are located so as to be at least partially covered by either the head member or the handlebars when the head member is in the non-operational state, thereby preventing the under-platform wheel holders from being manipulable, for example, preventing the under-platform wheels from pivoting into a vertical orientation with respect to the platform.

According to a further aspect of the presently disclosed subject matter, the device of any of the above aspects, at least when in use in the first mode, comprises a connector having at least one state in which it protrudes outwardly from the first platform end at least as seen in a plan view of the device, and operable to be securely connected to a connector-engageable element of a stroller, e.g. at location/s disposed at a rear side of a stroller, for example a low rear bar of a stroller which extends between the stroller legs, the legs themselves, and/or any other rear portion of a stroller frame.

In some embodiments, the connector comprises a main body having an opening in which the connector-engageable element of the stroller is received. In some embodiments, the opening extends along an axis perpendicular to the symmetry axis. In some embodiments, where the connector-engageable element of the stroller is a stroller low bar extending between its legs, the connector is configured to fit onto the low bar, along at least a portion of the low bar's length. In some embodiments, at all states of the connector, the opening remains at the same orientation, generally facing the ground. This may be potentially advantageous in that no manipulation of the connector is required when connecting the device to the stroller.

Some embodiments may include a connector of other form, for example, a hook type connector, a latch connector, a quick-release connector, a strap-on connector, and/or any other suitable connector for securely attaching the device to the stroller.

According to a still further aspect of the presently disclosed subject matter, the device according to any of the above-described aspects, is further configurable into a third, storage mode in which at least the head member with its handlebars, the under-platform wheels and, optionally, a connector, if any, are disposed under the platform. In the storage mode, the device assumes a compact configuration which may be small enough to fit in a storage basket of a stroller, in a car truck, or as such.

According to a still further aspect of the presently disclosed subject matter there is provided a device configured to be removably attached to a stroller as a stroller board and comprising, at least in use, a platform having an upper surface suitable to support a child user thereon, a bar at least indirectly attached to an underside of the platform, a connector associated with the bar for removably connecting to the stroller, and a wheel at least indirectly connected to the platform adjacent its second end. The platform has a symmetry axis, a first platform end and a second platform end spaced along the symmetry axis, and the bar extends along at least a majority of the symmetry axis. The bar has a first bar end and a second bar end, the connector is associated with the first bar end and the wheel is associated with the second bar end and the bar is operable to cause the connector to protrude, in at least a first state of the connector, outwardly from the first platform end at least as seen in a plan view of the device. The connector can be detachably and securely mountable to the first end of the bar or it can be integrally or unitarily formed therewith. In some embodiments, the bar is slidably mounted, at least indirectly, to the underside of the platform and operable to move the connector between at least the first state in which the connector protrudes outwardly from the first platform end, and a second state in which the connector is located beneath the platform. In some embodiments the connector is according to the above-described aspect of the presently disclosed subject matter. In some embodiments, the bar has an adjustable length between its first and second ends. Optionally, the bar is telescopic. Optionally, the bar can be selectively locked at a plurality of positions along its sliding range.

In some embodiments, the device further comprises a housing attached to the underside of the platform for holding the bar to the platform. The housing has openings in the directions of the first and second platform ends, through each of which at least a part of the bar protrudes.

In some embodiments, the connector comprises a main body having an opening in which the connector-engageable element of the stroller is received. In some embodiments, the opening extends along an axis perpendicular to the symmetry axis. In some embodiments, where the connector-engageable element of the stroller is a stroller lower bar extending between its legs, the connector is configured to fit onto the lower bar, along at least a portion of the lower bar's length. In some embodiments, at all states of the connector, the opening remains at the same orientation, generally facing the ground. This may be potentially advantageous in that no manipulation of the connector is required when connecting the device to the stroller.

In some embodiments, the device comprises one or more lock mechanisms for maintaining device components at a selected position, state and/or orientation. In an example, the bar is configured to be locked at a selected configuration with respect to the bar-receiving housing. This can be achieved, for example, by a plurality of axially spaced apertures formed in the bar and optionally in the bar receiving housing, in which spring-biased button assemblies are respectively received for preventing axial sliding of the bar. In another example, the head member is configured to be locked in one or both of the operable state and the non-operable state. This can be achieved, for example, via internal locking members of the head member, which are selectively received in designated slot formations of the wheel holder, the slot formations being arranged to match the orientations of the head member in both the operable state (upright orientation) and the non-operable state (lowered orientation). In some embodiments, the internal locking members are controlled via a handle release mechanism, optionally located below the handlebars. Activation of the handle release mechanism, such as by manual pressing, moves the internal locking members to a position in which they do not interfere with pivoting of the head member, allowing the head member to be pivoted between the operable state and the non-operable state. In some embodiments, if the head member is telescopic, the handle release mechanism can be configured to allow, when pressed, lengthening or shortening of the head member, for example for adjusting a height of the handlebars.

As generally described herein, when a certain mode of the device is referenced it should be understood that in some embodiments a device provided may comprise only of such mode. For example, a device can be used only as a stroller board, or used only as a ride-on toy.

### BRIEF DESCRIPTIONS OF THE DRAWINGS

In order to better understand the subject matter that is disclosed herein and to exemplify how it may be carried out in practice, embodiments will now be described, by way of non-limiting examples only, with reference to the accompanying drawings, in which:
FIG. 1A is a perspective view of a device according to one example of the presently disclosed subject matter, shown in a fully collapsed storage mode.
FIG. 1B is a first perspective view of the device according to one example of the presently disclosed subject matter shown in a second mode of operation as a ride-on toy.
FIG. 1C is a first perspective view of the device according to the presently disclosed subject matter shown in a first mode of operation as a ride-along stroller board.
FIG. 1D is a second first perspective view of the device according to one example of the presently disclosed subject matter shown in the second mode of operation as a ride-on toy with a child user seated thereupon.
FIG. 1E is a second perspective view of the device according to the presently disclosed subject matter shown in the first mode of operation as a ride-along stroller board with a child user standing thereupon.
FIG. 2A is a first top perspective view of the device according to the presently disclosed subject matter shown from a second platform end of the device in the first mode of operation as a ride-along stroller board or in a stroller board mode.
FIG. 2B is a second top perspective view of the device according to the presently disclosed subject matter shown from a first platform end of the device in the first mode of operation as a ride-along stroller board or in the stroller board mode.
FIG. 3 is a first top perspective view of the device according to the presently disclosed subject matter shown from the second platform end of the device in the second mode of operation as an independent ride-on toy or in a ride-on mode with seat unit attached thereto.
FIG. 4 is a second top perspective view of the device according to the presently disclosed subject matter shown from the second platform end of the device in the second mode of operation as an independent ride-on toy or in the ride-on mode with seat unit removed therefrom.
FIG. 5A is a first top plan view of a platform of the device according to the presently disclosed subject matter depicting foot placement upon the platform when in the first mode of operation as a ride-along stroller board or in the stroller board mode.
FIG. 5B is a first top plan view of a platform of the device according to the presently disclosed subject matter depicting foot placement upon a ground surface adjacent the platform when in the second mode of operation as an independent ride-on toy or in the ride-on mode.
FIG. 6 is a bottom plan view of the platform of the device according to the presently disclosed subject matter when in the first mode of operation as a ride-along stroller board or in the stroller board mode.
FIG. 7 is a top perspective view of the platform of the device according to the presently disclosed subject matter shown from the second platform end when in the first mode of operation as a ride-along stroller board or in the stroller board mode.
FIG. 8 is a bottom perspective view of the platform of the device according to the presently disclosed subject matter shown from the first platform end when in the first mode of operation as a ride-along stroller board or in the stroller board mode.
FIG. 9 is an exploded top perspective view of the platform of the device according to the presently disclosed subject matter shown from the first platform end when in the first mode of operation as a ride-along stroller board or in the stroller board mode.
FIG. 10 is an exploded top perspective view of the platform of the device according to the presently disclosed subject matter shown from the first platform end when in the second mode of operation as an independent ride-on toy or in the ride-on mode.
FIG. 11 is a top plan view of the device according to the presently disclosed subject matter shown in the first mode of operation as a ride-along stroller board or in the stroller board mode with seat unit attached.
FIG. 12 is a bottom plan view of the device according to the presently disclosed subject matter shown in the first mode of operation as a ride-along stroller board or in the stroller board mode.
FIG. 13 is a side elevational view of the device according to the presently disclosed subject matter shown in the first mode of operation as a ride-along stroller board or in the stroller board mode.
FIG. 14 is a first elevational end view of the device according to the presently disclosed subject matter shown from the first platform end in the first mode of operation as a ride-along stroller board or in the stroller board mode with seat unit attached.
FIG. 15 is a second elevational end view of the device according to the presently disclosed subject matter shown from the second platform end in the first mode of operation as a ride-along stroller board or in the stroller board mode with seat unit attached.
FIG. 16 is a side elevational view of the device according to the presently disclosed subject matter shown in the first mode of operation as a ride-along stroller board or in the stroller board mode with seat unit removed.
FIG. 17 is a top plan view of the device according to the presently disclosed subject matter shown in the first mode of operation as a ride-along stroller board or in the stroller board mode with seat unit removed.
FIG. 18 is an end view of the device according to the presently disclosed subject matter shown from the first platform end in the first mode of operation as a ride-along stroller board or in the stroller board mode with seat unit removed.
FIG. 19 is a side elevational view of the device according to the presently disclosed subject matter shown in the second mode of operation as an independent ride-on toy or in the ride-on mode with seat unit attached.
FIG. 20 is a first end elevational view of the device according to the presently disclosed subject matter shown from the second platform end in the second mode of operation as an independent ride-on toy or in the ride-on mode with seat unit attached.
FIG. 21 is a second end elevational view of the device according to the presently disclosed subject matter shown from the first platform end in the second mode of operation as an independent ride-on toy or in the ride-on mode with seat unit attached.
FIG. 22 is an exploded top perspective view of portions of the device according to the presently disclosed subject matter with platform removed to show various peripheral components when in the first mode of operation as a ride-along stroller board or in the stroller board mode.
FIG. 23 is an exploded top perspective view of portions of the device according to the presently disclosed subject matter with platform removed to show various peripheral components when in the second mode of operation as an independent ride-on toy or in the ride-on mode.
FIG. 24 is a first perspective view of a connection arrangement of the device according to the presently disclosed subject matter when in the first mode of operation as a ride-along stroller board or in the stroller board mode with a fragmentary stroller portion connected to the connection arrangement to show connectivity between the connection arrangement and the stroller portion.
FIG. 25 is a second perspective view of a connection arrangement of the device according to the presently disclosed subject matter when in the first mode of operation as a ride-along stroller board or in the stroller board mode with a fragmentary stroller portion connected to the connection arrangement to show connectivity between the connection arrangement and the stroller portion.
FIG. 26 is a side perspective view of a connector main body of the device according to the presently disclosed subject matter.
FIG. 27 is an exploded top perspective view of the removable seat unit of the device according to the presently disclosed subject matter.
FIG. 28 is a top perspective view of the removable seat unit with a quick release mechanism in assembled relation with a connector anchor portion of the device according to the presently disclosed subject matter.
FIG. 29 is an exploded top perspective view of the removable seat unit with a quick release mechanism and connector anchor portion of the device according to the presently disclosed subject matter.
FIG. 30 is an enlarged top perspective view of an alternative seat connector and quick release mechanism in assembled relation with the connector anchor portion of the device according to the presently disclosed subject matter.
FIG. 31 is an enlarged bottom perspective view of the alternative seat connector and quick release mechanism in assembled relation with the connector anchor portion of the device according to the presently disclosed subject matter.
FIG. 32 is an enlarged bottom perspective view of the connector anchor portion of the device according to the presently disclosed subject matter.
FIG. 33 is an exploded top perspective view of the alternative seat connector with fragmentary post and quick release mechanism according to the presently disclosed subject matter.
FIG. 34 is an enlarged bottom view of the alternative seat connector and quick release mechanism in assembled relation with the connector anchor portion of the device according to the presently disclosed subject matter.
FIG. 35 is a bottom perspective view of an alternative bar element showing button-receiving apertures formed in an underside of the alternative bar element according to the presently disclosed subject matter.
FIG. 36 is a bottom perspective view of the alternative bar element showing spring-biased button assemblies in assembled relation therewith with buttons of the spring-biased button assemblies extending through the button-receiving apertures according to the presently disclosed subject matter.
FIG. 37 is an exploded perspective view of the spring-biased button assemblies according to the presently disclosed subject matter.
FIG. 38 is a bottom perspective view of portions of the device depicted in the ride-on mode showing the relative configuration of the bar relative to a bar-receiving housing according to the presently disclosed subject matter.
FIG. 39 is a bottom perspective view of portions of the device depicted in the stroller board mode showing the relative configuration of the bar relative to the bar-receiving housing according to the presently disclosed subject matter.
FIG. 40 is front elevational view of the head member with a handle release mechanism in assembled relation with a head member wheel holder and a head member wheel according to an embodiment of the presently disclosed subject matter.
FIG. 41 is a top perspective view of the head member with handle release mechanism in assembled relation with the head member wheel holder and the head member wheel according to an embodiment of the presently disclosed subject matter.
FIG. 42 is a fragmentary perspective view of the head member with handle release mechanism with parts broken away to reveal otherwise hidden structure according to an embodiment of the presently disclosed subject matter.
FIG. 43 is a fragmentary first enlarged perspective view of upper portions of the head member with handle release mechanism with parts broken away to reveal otherwise hidden structure according to an embodiment of the presently disclosed subject matter.
FIG. 44 is a fragmentary further enlarged perspective view of upper portions of the head member with handle release mechanism with parts broken away to reveal otherwise hidden structure according to an embodiment of the presently disclosed subject matter.
FIG. 45 is a fragmentary perspective view of lower portions of the head member and attachment mechanism with parts broken away to reveal an internal locking member associated with the handle release mechanism, according to an embodiment of the presently disclosed subject matter.
FIG. 46 is a fragmentary enlarged perspective view of lower portions of the head member and attachment mechanism with parts broken away to reveal the internal locking member according to an embodiment of the presently disclosed subject matter.
FIG. 47 is a diagrammatic side-by-side comparative depiction of the handle release mechanism and internal locking members in a head member locking configuration juxtaposed adjacent a head member release configuration to show relative displacements of the handle release mechanism and internal locking members according to an embodiment of the presently disclosed subject matter.
FIG. 48 is a top perspective view of the handle release mechanism connected to the internal locking members by way of generic force transmission mechanisms according to an embodiment of the presently disclosed subject matter.
FIG. 49 is an enlarged top perspective view of a first lateral side of a head member wheel holder and a head member attachment mechanism of the device with parts of the attachment mechanism removed to show a first internal locking member engaged with a first slot formation formed on the attachment mechanism operable to lock the head member in the stroller board mode.
FIG. 50 is a lateral side view of the head member wheel holder and the head member attachment mechanism of the device with parts of the attachment mechanism removed to show a second internal locking member engaged with a first slot formation formed on the attachment mechanism operable to lock the head member in the stroller board mode.
FIG. 51 is a lateral side view of the head member wheel holder and the head member attachment mechanism of the device with parts of the attachment mechanism removed to show the second internal locking member engaged with a second slot formation formed on the attachment mechanism operable to lock the head member in the ride-on mode.
FIG. 52 is a simplified flowchart of a general method of transforming a device according to the presently disclosed subject matter from the ride-on toy mode to either the stroller-board mode or the storage mode;
FIGS. 53A to 53D schematically illustrate top views of a platform of the device according to various examples of the presently disclosed subject matter;
FIG. 54 schematically illustrates a portion of the device showing a connector according to an example of the presently disclosed subject matter;
FIGS. 55A and 55B each schematically illustrate bottom view of a portion the device showing a connector arrangement according to an example of the presently disclosed subject matter;
FIGS. 56A and 56B each schematically illustrate bottom view of a portion the device showing a connector arrangement according to another example of the presently disclosed subject matter;
FIGS. 57A schematically illustrates a front view of the device showing a head member-to-wheel holder attachment mechanism according to an example of the presently disclosed subject matter;
FIGS. 57B schematically illustrates a side view of the device showing a head member-to-wheel holder attachment mechanism according to another example of the presently disclosed subject matter.

### DETAILED DESCRIPTION OF EMBODIMENTS

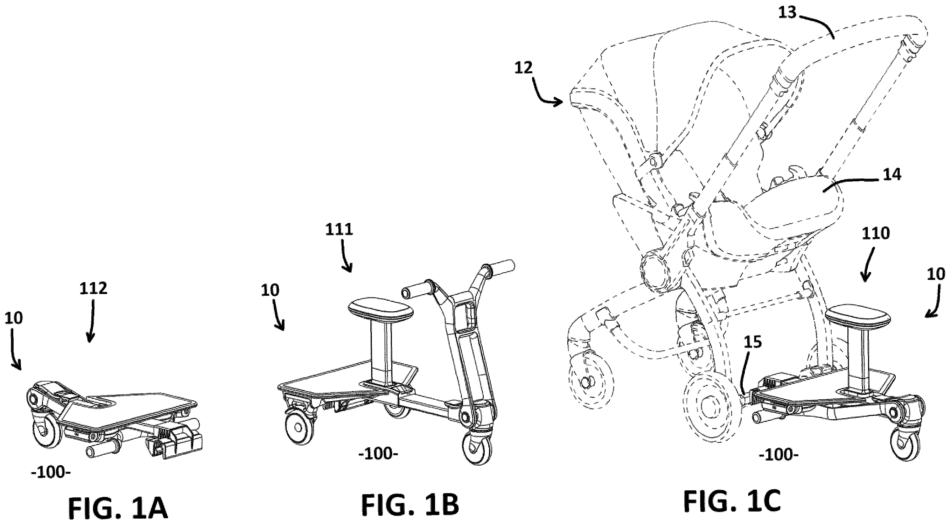

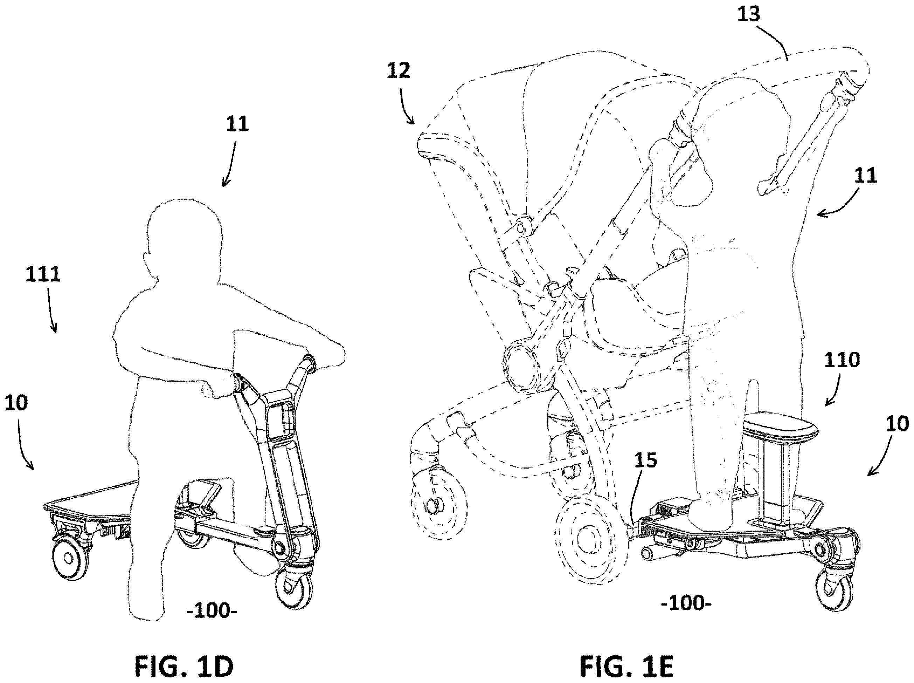

Referring now the drawings with more specificity, a device 10 according to the presently disclosed subject matter is configurable between several modes of operation, including a first, stroller board mode as at 110; a second, ride-on (toy) mode as at 111; and optionally, a third, storage mode as at 112. In this regard, the reader is firstly directed to FIGS. 1A through 1E. Comparatively referencing FIGS. 1A through 1E, the reader will there consider the storage mode 112 as generally depicted in FIG. 1A; the ride-on mode 111 as generally depicted in FIGS. 1B and 1D; and the stroller board mode 110 as generally depicted in FIGS. 1C and 1E. In the storage mode 112, the device 10 assumes a compact configuration and is incapable of independent movement along a support or ground surface 100. The device 10 is configurable into the third storage mode 112, for example, when a seat unit 20 is removed therefrom, a head member 19 of the device 10 is either at a lowered, non-operable position, or is detached from the platform, and/or one or more of under-platform wheels 17 are folded into their non-operational state.

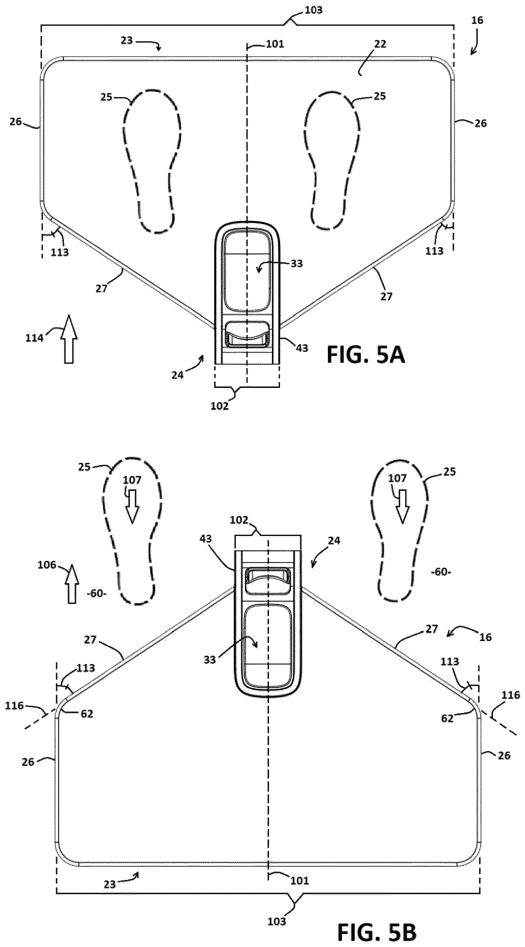

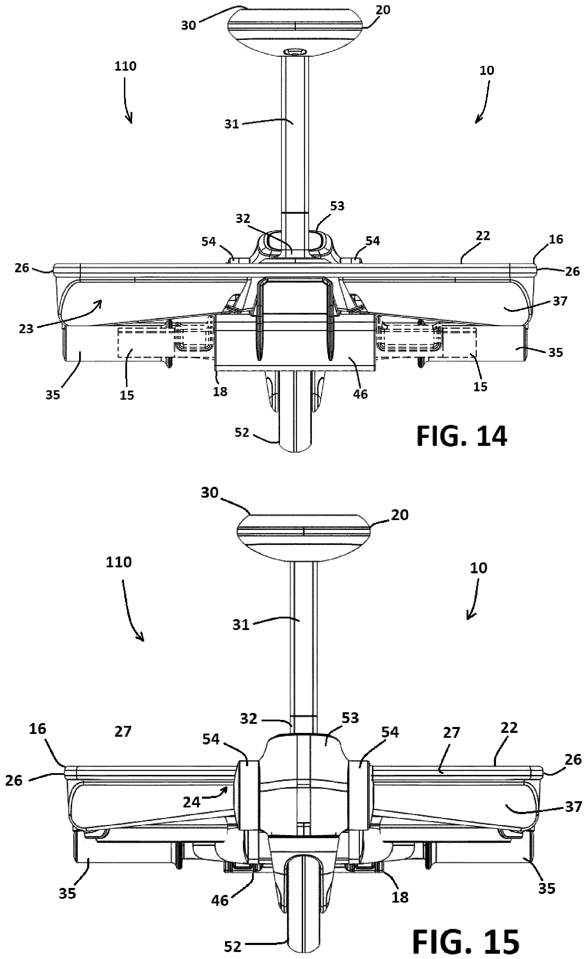

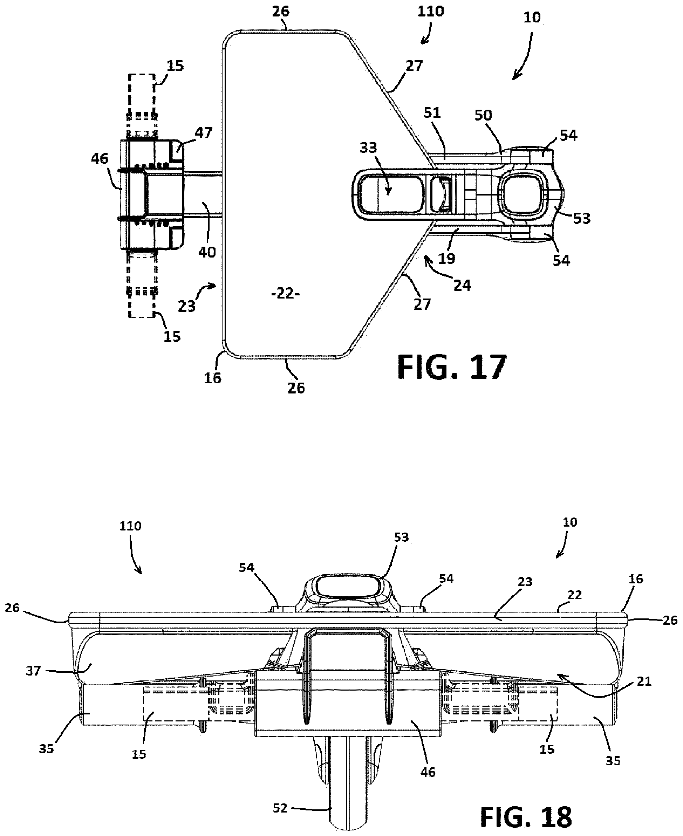

In the ride-on mode 111 as depicted in FIGS. 1B, 1D, 3, 4, and 19 - 21, the device 10 may be used independently by a child user 11. The child user 11 may sit upon the seat unit 20 of the device 10 while placing his or her feet on the support or ground surface 100 and push off the ground surface 100 as at vector 107 with his or her feet to propel the device 10 forward as at vector 106. Vectors 106 and 107 are further depicted and referenced in FIG. 5B. In the stroller board mode 110 as depicted in FIG. 1C, 1E, 2A, 2B, and 11 - 18, the device 10 can be connected to a stroller 12 or similar other tow apparatus so that as the stroller 12 or tow apparatus is pushed along, the device 10 travels with it, being at least partially supported by the stroller 12 or tow apparatus.

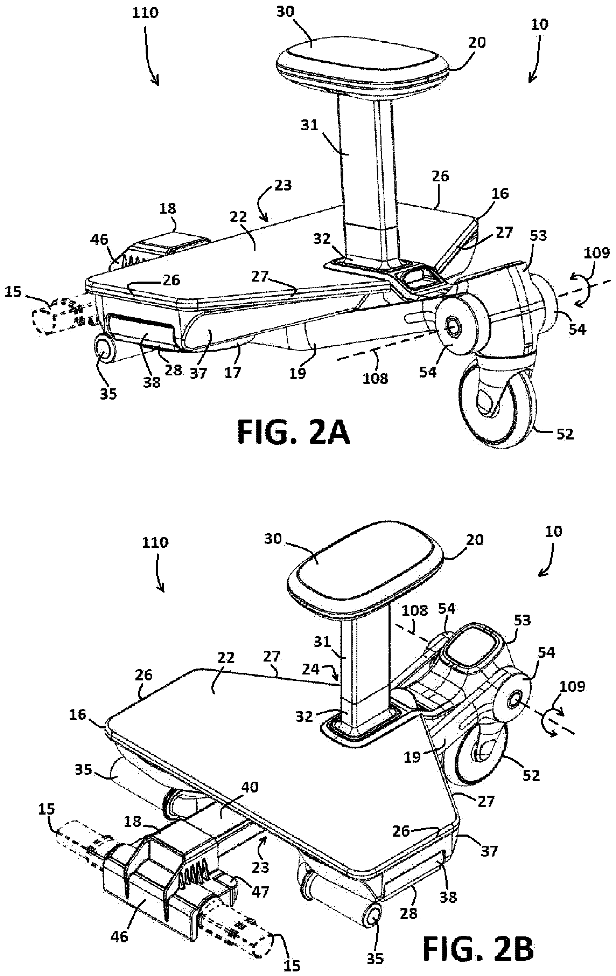

Further, in the ride-on mode 111, the child user 11 may use the head member 19 of the device 10 for controlling, for example steering, device. In some examples, the height of the platform (the distance of the upper surface of the platform and the support or ground surface) is substantially shorter than the height of handlebars 35 of the head member 19 (from the ground surface or other supporting surface), for example, so that the user can easily access the handlebars while sitting on the seat unit 20. For instance, in some examples, the height of the platform can be 10 percent, 20 percent, 30 percent, or 40 percent of the height of the handlebars 35 of the head member 19 in the ride-on mode 111. In some examples, a coupling between the head member and the platform is closer to an end of the head member that is closer to the wheels (and therefore, to the ground or other support surface) and distanced from the end of the head member where handlebars are located. To enable connectivity, the device 10 includes a connection arrangement or connector 18 operable to connect the device 10 to the stroller 12 or tow apparatus. The connector 18 can connect to a connector-engageable element of the stroller, for example, to a frame of a stroller 12, to the legs of a stroller 12, to wheel holders of a stroller 12, or to any other suitable part of a stroller 12 which provides for the device 10 to be connected to the stroller 12 as directed or pushed by the parent or caretaker. FIG. 1C depicts the device 10 connected to an exemplary lower bar 15 of the stroller 12. Fragmentary portions of the lower bar 15 are further depicted in FIGS. 2A, 2B, 11 - 14, 16 - 18, 22, 24, and 25 for aiding the reader to understand how the connector 18 may attach to the lower bar 15. In the stroller board mode 110, the child user 11 can either sit or stand on the device 10, while optionally placing their hands on a portion of the stroller 12, such as the stroller handle 13 or infant carriage portion 14 as referenced in FIG. 1C.

It will be understood the device 10 according to the presently disclosed subject matter is configured to be selectively transformed between at least two of the above-described several modes by at least some portions of the device 10 being manipulable with respect to other portions of the device 10, as will be described in more detail herein. For instance, in some examples, the device can be selectively transformed between the stroller board mode and the ride-on mode by at least the head member being manipulable between a non-operable state and an operable state, respectively. In the operable state, an elongate portion of the head member can extend transversely to the platform and handlebars can be accessible for use of the device, and in the non-operable state, the elongate portion and the handlebars can be located so as to least interfere with use of the device in the stroller board mode.

In general, for the elongate portion and the handlebars to be least interfering with use of the device, the elongate portion and the handlebars can be either detached from the platform, pivoted to an under-platform position or otherwise positioned with respect to the platform as to not (or least) interfere with use of the device.

In some examples, the device can be configured to be selectively transformed between the stroller board mode and the ride-on mode at least by one or more of under-platform wheels being manipulable between a non-operational state and an operational state, respectively. In the operational state, the lowermost points of the wheels can define a reference plane of the device and the under-platform wheels can be rolled along a ground surface, for example, in the ride-on mode of the device. In the non-operational state, one or more of the under-platform wheels can be located above the reference plane in the stroller board mode of the device.

In general, the under-platform wheels can be displaced between the operational and non-operational states, for example, by pivoting movement (for example, by folding of the wheels), by linear movement (for example, vertical movement of the wheels), or by being detached from the platform. Accordingly, the device can comprise a mechanism or arrangement suitable to allow one or more movements of the under-platform wheels with respect to the platform and/or the detachability of the under-platform wheels from the platform. In some examples, the under-platform wheels can be connected at least indirectly (i.e., directly or indirectly) to the platform by such an arrangement or mechanism, or equivalents thereof.

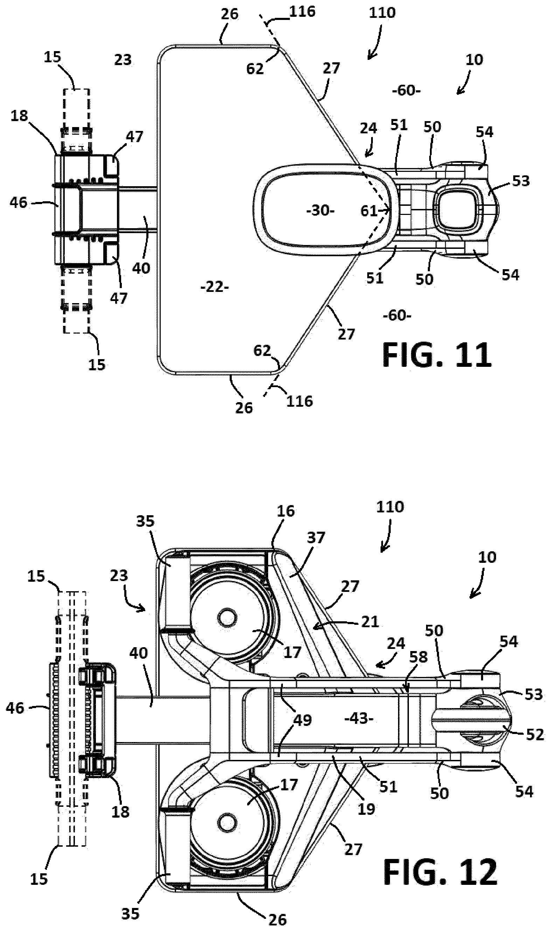

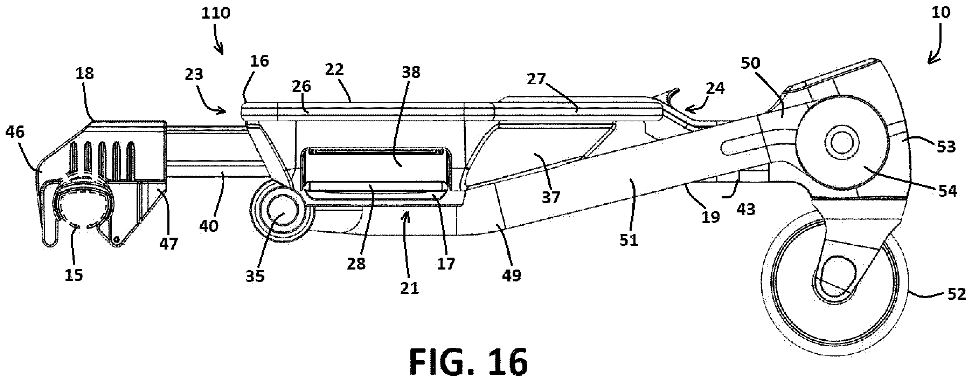

Referencing FIGS. 2A and 2B, for example, the reader will there respectively consider posterior and anterior perspective views of the device 10 configured in the stroller board mode 110 and outfitted with the removable seat unit 20. As earlier indicated, the stroller board mode 110 is further depicted in FIGS. 11 through 18. FIGS. 11 through 15 depict various views of the device 10 in the stroller board mode 110 with removable seat unit 20 assembled with the device 10, and FIGS. 16 through 18 depict the device 10 with the removable seat unit 20 removed therefrom.

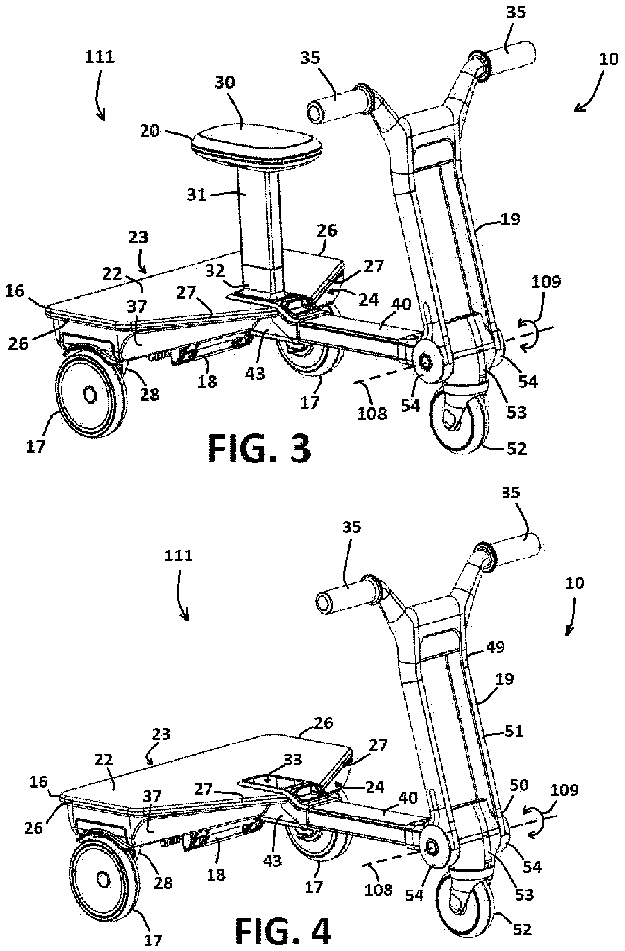

The ride-on mode 111 is generally depicted in FIGS. 1B and 1D, and more particularly illustrated in FIGS. 3, 4, and 19 through 21. Comparatively referencing FIGS. 3 and 4, the reader will there consider the device 10 in the ride-on mode 111 as outfitted with the seat unit 20 in FIG. 3 and with the seat unit 20 removed in FIG. 4. The removable seat unit 20 enables a child user 11 to either sit comfortably upon the device 10 while in the ride-on mode 111 or remove the seat unit 20 to freeing additional space upon the platform 16 as the user may elect. Typically, a child user 11 will utilize the device 10 with the removable seat unit 20 assembled with the device 10. However, in certain instances, removal of the seat unit 20 is possible in the ride-on mode 111. The seat unit 20 may also be removed in the stroller board mode 110 to enable the user to stand on the platform, for example, while being towed by the stroller 12 or similar other tow apparatus. This configuration is generally depicted in FIGS. 16 through 18.

In general, the platform 16 can comprise a seat mounting area having seat mounting arrangement at which the seat unit 20 can be removably connected to the platform. In some examples, the seat mounting area can include a seat-connector-receiving aperture 33 constituting at least a part of the seat mounting arrangement, into which a part of the seat unit can be received for mounting the seat unit to the platform.

The device 10 according to the illustrated examples of the present disclosed subject matter typically comprises the following main components: a platform assembly or platform 16; at least two under-platform wheels 17 connected to the platform 16; a connector arrangement or connector 18; a head member 19 manipulable between an operational state and a non-operational state; and the removable seat unit 20. Notably, the under-platform wheels 17 are retractable (or otherwise moved away from a reference plane) while in the stroller board mode 110 such that the connector 18 supports a first platform end 23 of the platform 16 and the device 10 with the under-platform wheels 17 being retracted into a storage state (or a non-operational state) in which the wheels are lifted from a reference plane 115. Further, from a comparative inspection of FIGS. 2A through 4, the reader will particularly note the head member 19 is reconfigurable depending on mode configuration.

In the illustrated examples, in the ride-on mode 111 depicted in FIGS. 3 and 4, the head member 19 extends upwardly relative to the platform 16 such that a child user 11 may grip laterally opposed handlebars 35 located at an upper end 49 of the head member 19. When in the stroller board mode 110 depicted in FIGS. 2A and 2B, the head member 19 and handlebars 35 are reconfigured to be located beneath the platform 16. To achieve these configurations the head member 19 is pivotable as at arrows 109 about a pivot axis 108 as generally depicted in FIGS. 2A through 3. It will be understood that the head member 19 is configurable between (a) an operable state in which an elongate portion 51 thereof extends transversely to the platform 16 and the handlebars 35 are accessible for use of the device 10 in the second or ride-on mode 111; and (b) a non-operable state, in which the elongate portion 51 and the handlebars 35 are located so as to be prevented from constituting an obstacle when the device 10 is used in the first or stroller board mode 110.

In general, the platform arrangement or platform 16 can have a shape, for example as seen in the plan view of the device, that allows a child user to rest his/her feet on the platform 16 during use of the device in the stroller board mode, and that allows the user to place his/her feet on the ground beyond and/or adjacent the second platform end 24 (along its contour) while sitting on the seat unit during use of the device in the ride-on mode. For instance, in the stroller board mode, the child user can face along the direction of travel of the device, i.e., the direction extending from the second platform end 24 to the first platform end 23, and the user can rest his/her feet on the platform. In the ride-on mode, the child user can face along the direction of travel of the device, i.e., the direction extending from the first platform end 23 to the second platform end 24, and the user can rest his/her feet beyond the second platform end 24. The platform 16 can have a length in the direction extending between the first platform end and the second platform end, and a width perpendicular to the length. The length of the platform can extend along a medially extending symmetry axis. The symmetry axis can pass through the respective center points of the first and second platform ends. In some examples, the length of the platform can be maximal at the symmetry axis and reduced as the measurements are taken farther from the symmetry axis along the width of the platform. The length of the platform can be minimal at the width-wise ends of the platform. The length of the platform can vary by virtue of the shape of at least the second platform end. For example, the shape of the second platform end can be such that the center point of the second platform end is farthest from the first platform end, and the second platform end gets closer to the first platform end as it goes outwardly from the center point thereof.

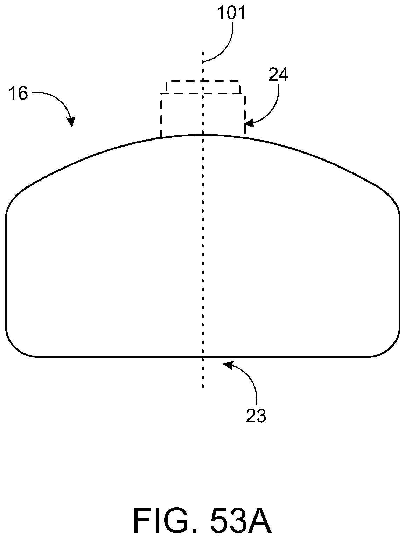

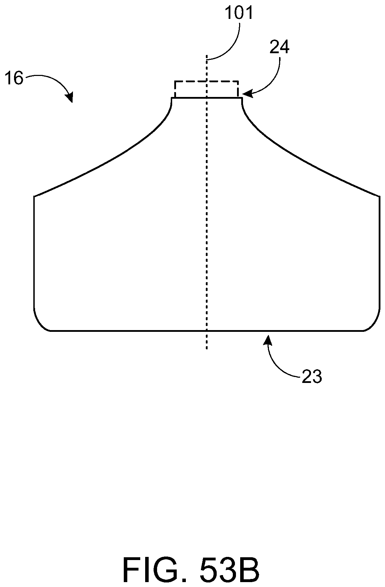

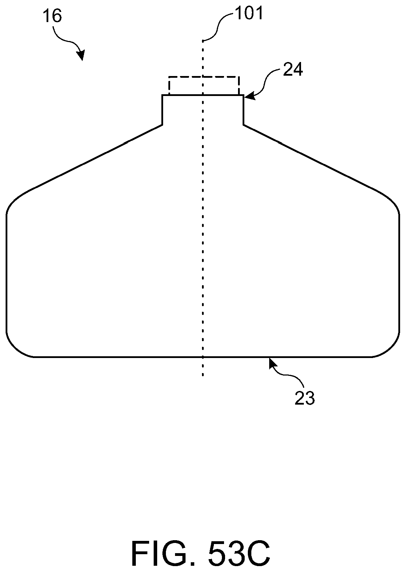

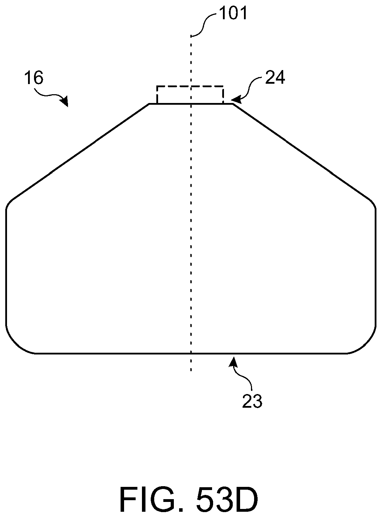

In some examples, the second platform end can have a generally curved shape along a majority thereof, for example, as shown in the FIGS. 53A and 53B schematically illustrating the platform 16. In some examples, the second platform end can have a generally linear shape along a majority thereof, for example, as shown in the FIGS. 53C and 53D schematically illustrating the platform 16.

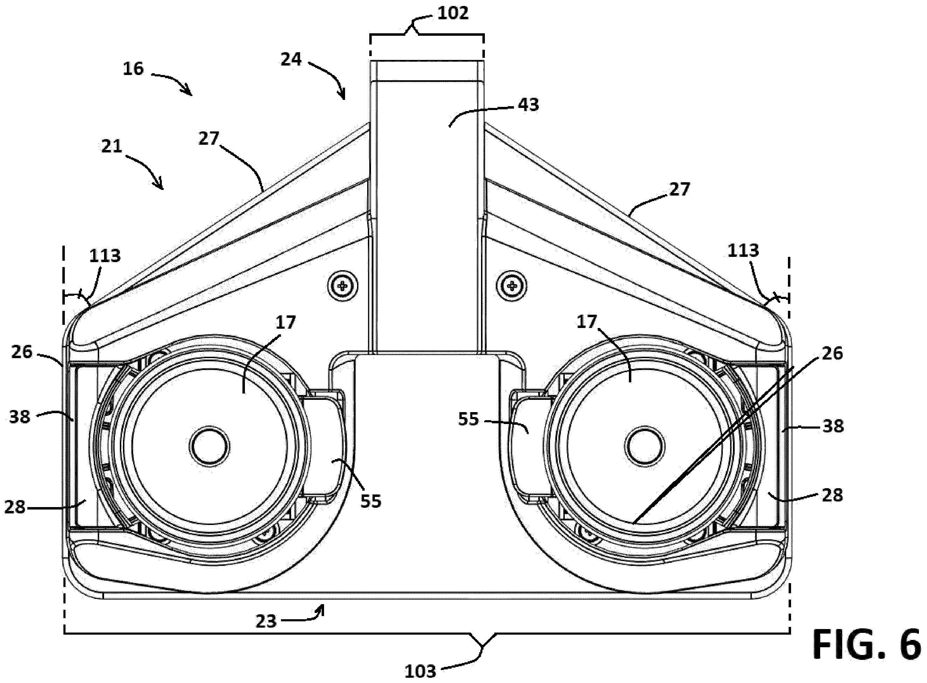

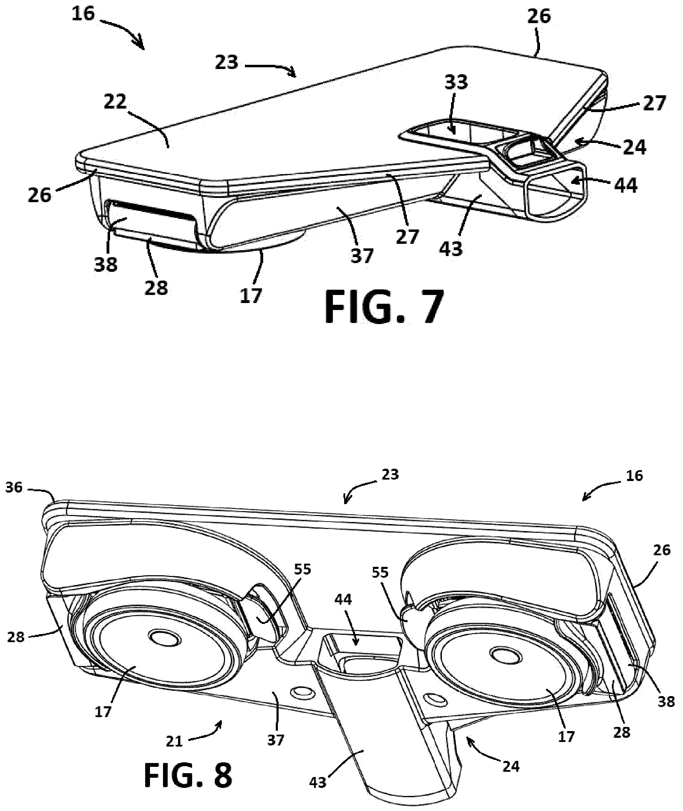

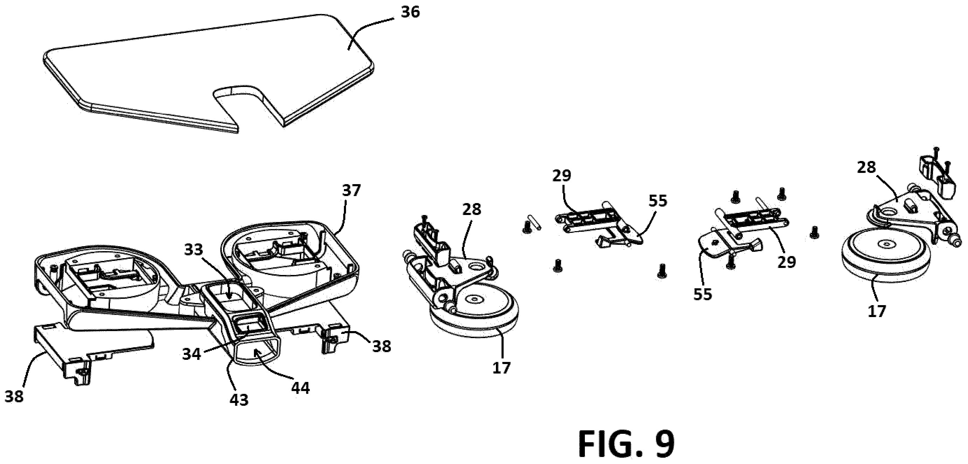

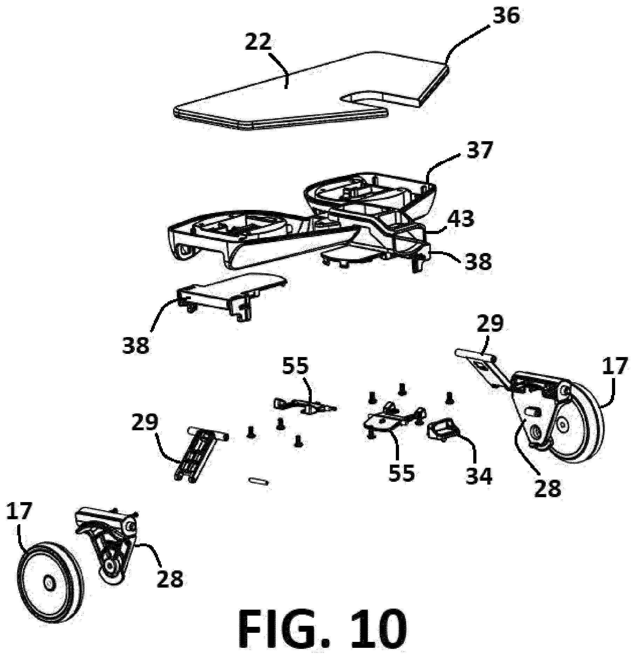

The platform arrangement or platform 16 is generally depicted in FIGS. 5A through 10 according to an illustrated example of the presently disclosed subject matter. Top plan views of the platform 16 are depicted in FIGS. 5A and 5B and a bottom plan view of the platform is depicted in FIG. 6. Further views of the platform 16 are depicted in FIGS. 7 through 10. FIG. 7 is a top perspective view of the platform 16 as viewed from the second platform end 24; FIG. 8 is a bottom perspective view of the platform 16 as viewed from the first platform end 23; FIG. 9 is an exploded view of the platform 16 when in the stroller board mode 110; and FIG. 10 is an exploded view of the platform 16 when in the ride-on mode 111. The platform arrangement or platform 16 comprises an underside portion 21 or under carriage as particularly depicted in FIG. 6 and a platform upper surface 22 as particularly and comparatively depicted in FIGS. 5A and 5B. The platform 16 extends between the first platform end 23 and a second platform end 24, which first and second platform ends 23 and 24 are spaced along a medially extending symmetry axis 101 oriented horizontally as generally depicted and referenced in FIGS. 5A and 5B.

The platform upper surface 22 can be sized to accommodate both feet of a child user 11, sitting or standing on the device 10. For ease of illustration, generic footprints are depicted at broken footprint outlines 25 to represent relative feet placement upon the platform upper surface 22 or ground surface 100 depending on the device application or mode configuration. In some embodiments, the platform 16 comprises a relatively narrow platform width as at 102, or narrows or tapers in the direction of the second platform end 24; and further comprises a relatively wider platform width as at 103 of at least 30 centimeters or a wide platform portion adjacent the first platform end 23. In some embodiments, the narrow portion at the second platform end 24 extends in a direction perpendicular to the symmetry axis 101 no more than 50% of the width 103 of the wide portion as measured along a direction perpendicular to the symmetry axis 101. The first platform end 23 is defined in part by laterally opposed side wall portions 26 and the second platform end 24 is defined in part by laterally opposed side wall portions 27. In some embodiments, the side wall portions 27 are obliquely angled relative to the substantially parallel side wall portions 26 as at angle 113 so as to narrow the second platform end 24 relative to the first platform end 23.

The relatively narrow platform width 102 of the platform 16 is sufficiently narrow at least at or adjacent the second platform end 24 so that when the device 10 is used in the ride-on mode 111, a child user 11 sitting on the seat unit 20 is able to step on the ground surface 100 with their feet adjacent opposing sides of the platform 16 in lateral adjacency to the side wall portions 27 as generally depicted by broken footprint outlines 25 in FIG. 5B. Comparatively referencing FIGS. 5B and 11, the reader will there consider certain plan views of the platform 16 and the device 10 in the second ride-on mode 111. Spaces as at 60 are located externally to diagonal axes 116 defined by the laterally opposed sidewall portions 27 whereby each diagonal axis 116 at least partially extends between a center point 61 of the seat unit (in a plan view) 20 and a respective end point 62 of the wide portion of the platform 16.

The spaces 60 are positioned farthest from the first platform end 23 and are free of any device elements including the platform 16. The child user's feet as at broken footprint outlines 25 may be positioned in these spaces 60. The relatively wider platform width 103 is sufficiently wide enough at least adjacent the first platform end 23 so that when the device 10 is used in the stroller board mode 110, a child user 11 sitting on the seat unit 20 is able to rest his or her feet upon the upper surface 22 of the platform 16, or is able to stand on the upper surface 22 of the platform 16 as generally depicted by broken footprint outlines 25 in FIG. 5A. The stroller board mode tow direction of the device 10 is generally depicted and referenced at vector 114 in FIG. 5A. When in the stroller board mode 110, the child user 11 generally faces the tow direction 114. In the ride-on mode 111, the child user 11 typically reverses his or her orientation relative to the device 10, and as earlier described, the child user 11 may typically sit upon the seat unit 20 of the device 10. When so seated, the child user 11 can place or position his or her feet upon the support or ground surface 100 as generally depicted by broken footprint outlines 25 within the spaces 60. The child user 11 may then push off the ground surface 100 as at vector 107 with his or her feet to propel the device 10 forward as at vector 106 as generally depicted and referenced in FIG. 5B.

Comparatively referencing FIGS. 7 through 10 the reader will there consider in greater detail the various components of the platform arrangement or platform 16. In some embodiments, the platform 16 comprises a platform member 36, a central body 37, wheel mechanism covers 38, the under-platform wheels 17, wheel holders 28, wheel holder support members 29, wheel locking members 55, and associated fastening or support hardware (not specifically referenced).

The under-platform wheels 17 are at least indirectly connected to the underside portion 21 or undercarriage of the platform 16 and are configured to be rolled along the ground surface 100 in at least one of the modes, as for example, in the ride-on mode 111 generally depicted in FIGS. 1B, 1D, 3, 4, and 19 through 21. Some or all of the under-platform wheels 17 can be moved (e.g., folded, pivoted, retracted, or raised) to a position in which they do not contact the ground surface 100, as for example, in the storage mode 112 and the stroller board mode 110 generally and respectively depicted in FIGS. 1A and 1C/1E.

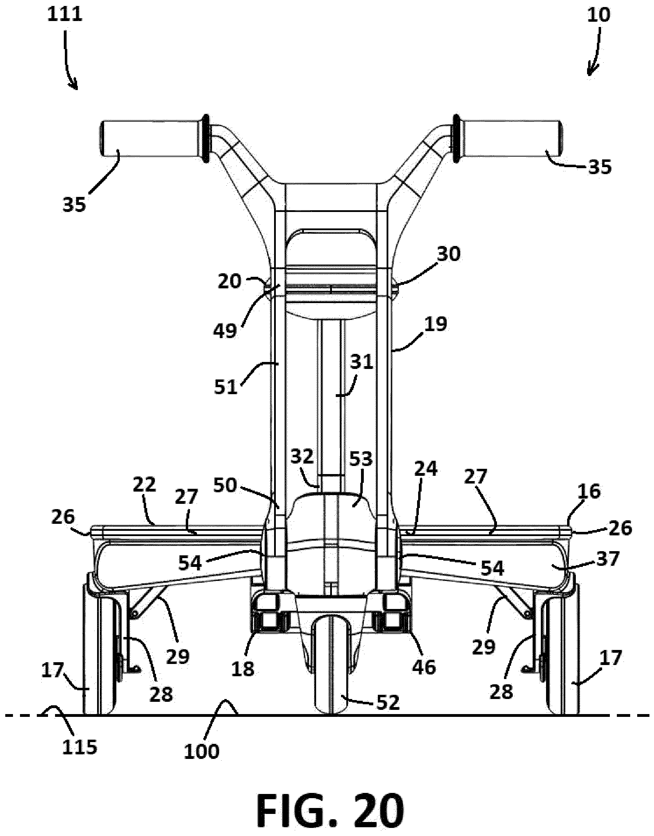

In some embodiments, the wheel holders 28 pivot about pivot axes to enable either the stroller board mode 110 or the ride-on mode 111. The under-platform wheels 17 are connected to the underside portion 21 of the platform 16 in some embodiments so as to be capable of being configured into an operational state, in which the lowermost points of the under-platform wheels 17 define the (horizontal) reference plane 115 of the device 10 and in which the under-platform wheels 17 can be rolled along the ground surface 100 as in the second ride-on mode 111 of the device 10. The under-platform wheels 17 are further capable of being configured into a non-operational (storage) state in which the under-platform wheels 17 are located above the reference plane 115 as in the first stroller board mode 110 of the device 10. When in the ride-on mode 111, the horizontal reference plane 115 is generally coplanar with the ground surface 100 as generally depicted in FIGS. 20 through 22. In some embodiments, each of the under-platform wheels 17 extends along a plane which forms with the reference plane 115 a first angle (e.g., 90 degrees) when the under-platform wheels 17 are in the operational state and a second angle (e.g., in the range of 0 - 45 degrees) when the under-platform wheels 17 are in the storage state. The first angle is greater than the second angle in these embodiments.

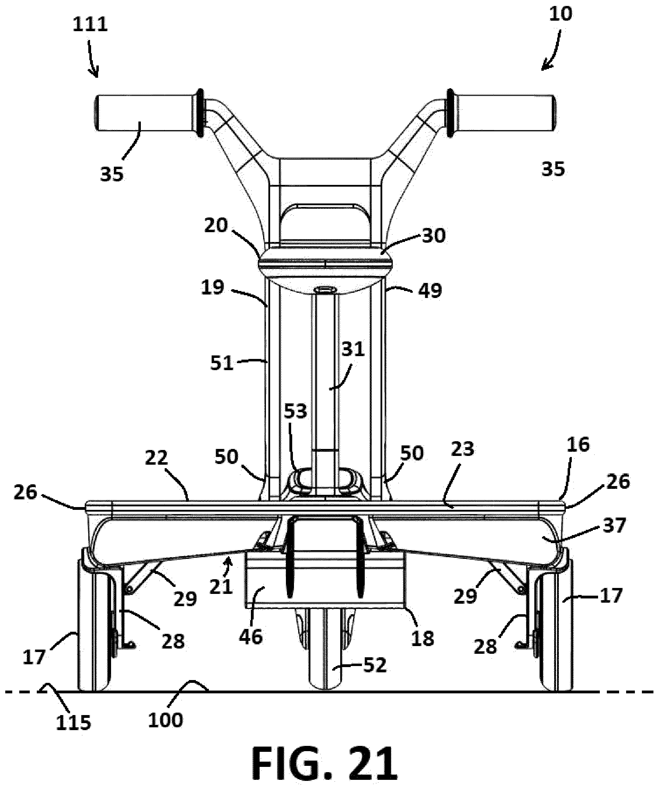

In other words, in some embodiments, the under-platform wheels 17 are each connected to the underside portion 21 or undercarriage of the platform 16 via pivotable wheel holders 28, which wheel holders 28 are configured to be folded or pivoted so as to hold the under-platform wheels 17 in a non-perpendicular orientation with respect to the platform 16 or in substantially parallel relation to the platform upper surface 22 when in the stroller board mode 110. The wheel locking members 55 are operable to selectively retain the under-platform wheels 17 in the retracted wheel configuration for supporting the stroller board mode 110 as generally depicted at least in FIGS. 6 and 8. In some embodiments, the wheel holder support members 29 extend diagonally between the wheel holder 28 and the underside portion 21 of the platform 16 as generally depicted in FIGS. 20 and 21. The wheel holder support members 29 help stabilize the wheel holders 28 when in the ride-on mode 111 and are movable with the under-platform wheels 17 when being reconfigured (e.g. pivoted or retracted) into the central body 37 of the platform 16 when in the stroller board mode 110.

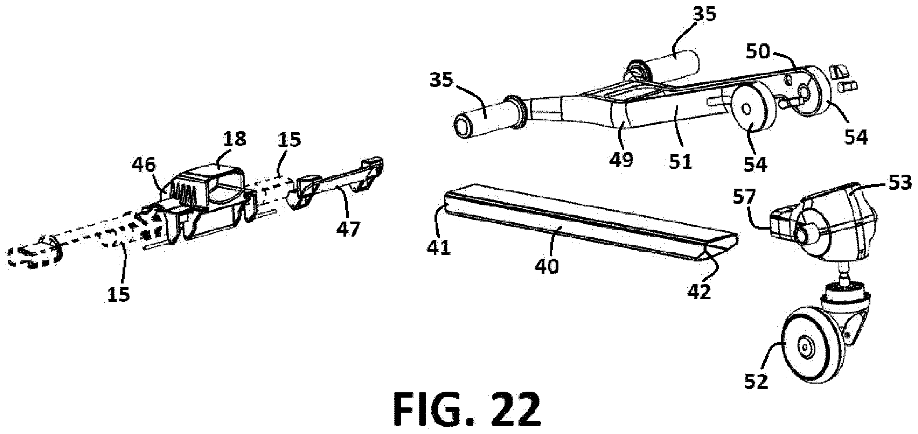

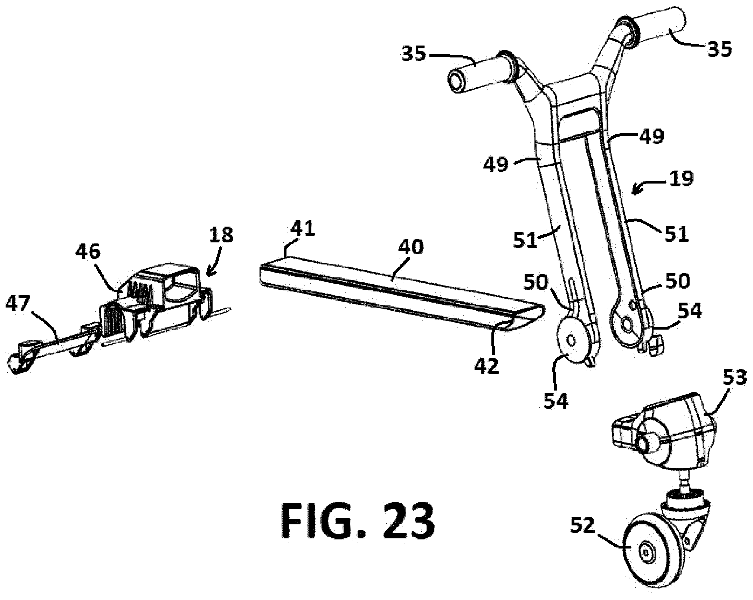

The connector arrangement or connector 18, particularly depicted in FIGS. 22 through 26, is operable to connect the device 10 to a stroller 12 or similar other tow apparatus. The connector protrudes, in at least a first state of the connector 18, outwardly from the first platform end 23 of the platform 16 at least as further seen in plan views of the device 10 in FIGS. 11 and 12. In some embodiments, the connector 18 comprises a connector main body 46, which connector main body 46 may further comprise a member-receiving structure as exemplified by a channel, groove or opening as at 45 and a bar-receiving mouth 56 for mating with a first bar end 41 of a support bar 40 as particularly depicted and referenced in FIGS. 22 and 23.

Referring now more particularly to the bar 40, in some embodiments the bar 40 is rigid and elongate, and connects a head member wheel holder 53 to the platform 16 at least indirectly. The bar 40 comprises a first bar end 41 that mates with the connector 18, which connector 18 connects or links to the stroller 12 or similar other tow apparatus. In some embodiments, the bar 40 and the connector 18 are configured to move or be linearly displaced together as a single unit along or in parallel relation to the symmetry axis 101. The bar 40 further comprises a second bar end 42 which is received within or otherwise mates with the head member wheel holder 53 adjacent the second platform end 24. In some embodiments, the bar 40 is held to an underside portion 21 of platform 16 by means of a bar-receiving housing 43.

The connector 18 may further comprise a release button mechanism 47, for releasing the grip of the connector so as to remove the connector from the lower bar of the stroller. Pressing onto release button mechanism 47 retracts protrusions 84 so that hold of the stroller lower bar inside opening 45 is released.

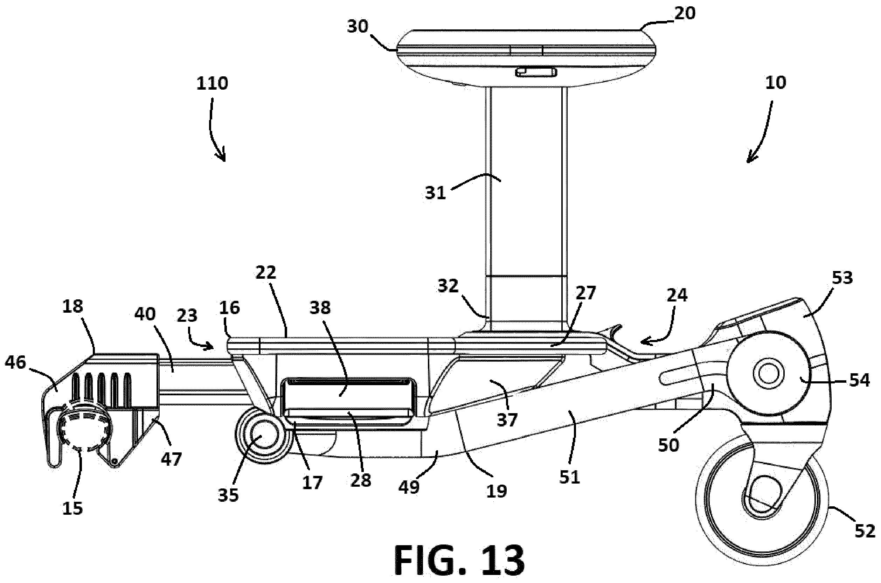

At least in the stroller board mode 110, the connector 18 protrudes outwardly from the first platform end 23 of the platform 16 at least as seen in plan views of the device 10 as generally depicted in FIGS. 11 and 23. The stroller board mode 110 is further comparatively depicted in FIGS. 13 through 15 with the removable seat unit 20 installed. Comparatively referencing FIGS. 16 through 18, the reader will there consider the device 10 with removable seat unit 20 removed when in the stroller board mode 110. As earlier described, the connector arrangement or connector 18 is attached to bar 40, which bar 40 is movably attached at least indirectly to the underside 21 of the platform 16 within the bar-receiving housing 43 of the central body 37 and extends along at least a majority of the symmetry axis 101. In some embodiments, the connector 18 is configured to receive a connector-engageable element of a stroller as exemplified by the lower bar 15 of the stroller 12. As earlier indicated, fragmentary portions of a stroller lower bar 15 are depicted in FIGS. 2A, 2B, 11 through 14, and 16 through 18 to help the reader visually understand how the connector 18 attaches thereto.

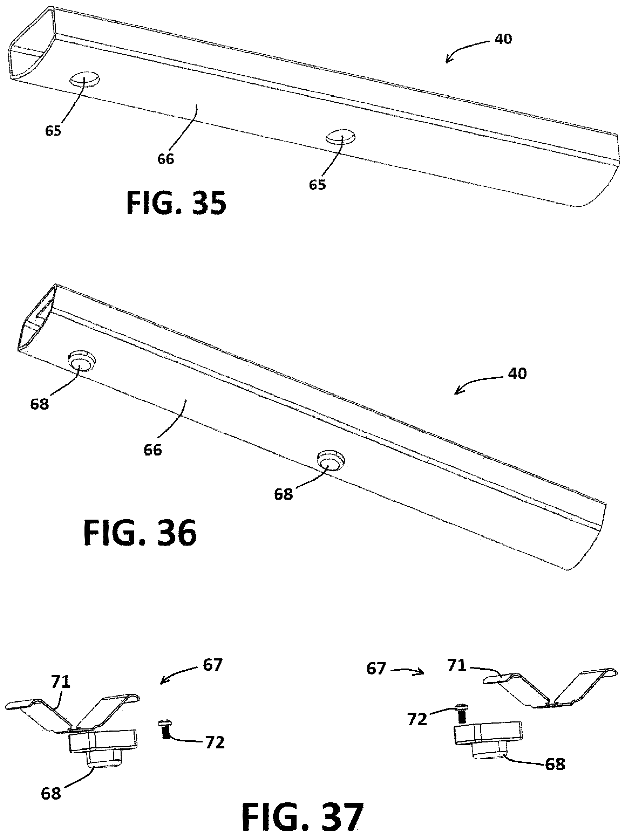

The bar 40 may be outfitted with at least one, but in some embodiments two axially spaced button-receiving apertures 65 located at the underside 66 of the bar 40 as generally and comparatively depicted in FIGS. 35 through 39. Corresponding spring-biased button assemblies as at 67 are positioned internally of the bar 40 and are associated with each button-receiving aperture 65. Together, the button-receiving apertures 65 and spring-biased button assemblies 67 enable the user to selectively and actuably depress a button 68 of each spring-biased button assembly 67 and return the button 68 into a button-locating aperture 69 formed on an underside 70 of the bar-receiving housing 43. Additionally or alternatively, buttons can be pushed or guided inwardly by the bar-receiving housing and/or by a housing of the wheel holder when the bar slides with respect to them.

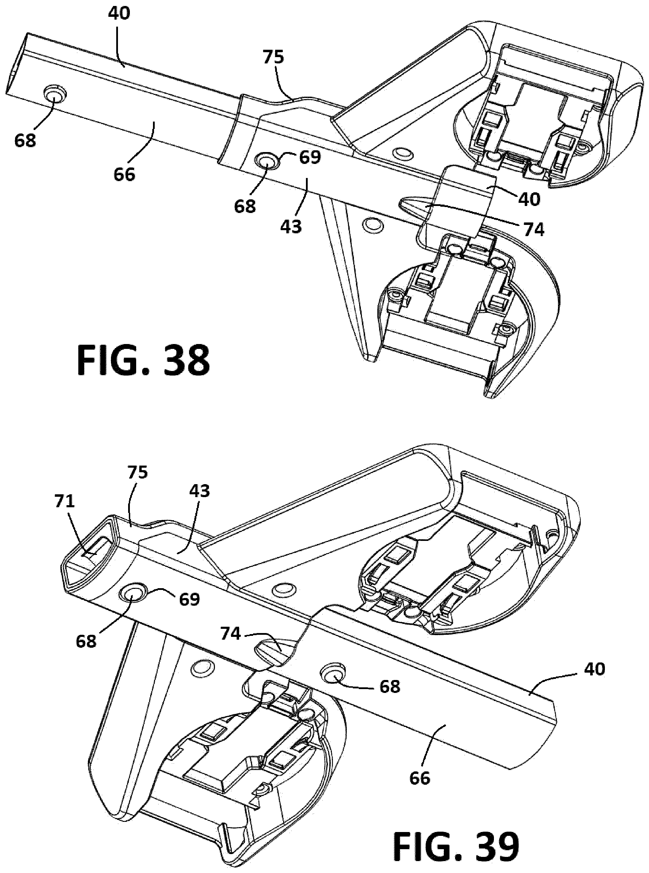

The buttons 68 are operable to respectively locate and retain the bar 40 in axially spaced relation along the symmetry axis 101 relative to the bar-receiving housing 43 when reconfiguring the device 10 into either the stroller board mode 110 or the ride-on mode 111. Relevant portions of the device 10 are depicted in FIG. 38 generally depicting the ride-on mode 111 in which the bar 40 is extended away from the bar-receiving housing 43 in a first direction. Comparatively referencing FIG. 39, relevant portions of the device 10 are therein depicted in the stroller board mode 110 in which the bar 40 is retracted into the bar-receiving housing 43 opposite the first direction.

In some examples, the bar 40 may extend only along a part of the length of the platform; such structure can be relevant, for example, in embodiments in which a connector to the stroller is not connected to an end of the bar but rather connected directly to the platform.

FIG. 35 depicts the bar 40 with spring-biased button assemblies 67 removed thereby more clearly revealing the button-receiving apertures 65. FIG. 36 depicts the bar 40 outfitted with the spring-biased button assemblies 67 such that the buttons 68 are spring-returned through the button-receiving apertures 65. FIG. 37 depicts the spring-biased button assemblies 67 that are otherwise housed internally within the bar 40. Each spring-biased button assembly 67 comprises a wing shaped spring element 71, a button 68, and a fastener 72 for fastening the respective spring-biased button assembly 67 to the bar 40. The button-receiving apertures 65 and spring-biased button assemblies 67 are axially spaced from one another so as to enable the stroller board mode 110 and ride-on mode 111 configurations relative to the bar-receiving housing 43 by way of the button-receiving aperture 69 formed at the underside 73 of the bar-receiving housing 43. Notably, the buttons 68 and the button-receiving aperture 69 need not be formed at the underside portions 66 and 73 of the bar 40 and bar-receiving housing 43 and may be alternatively positioned in some embodiments.

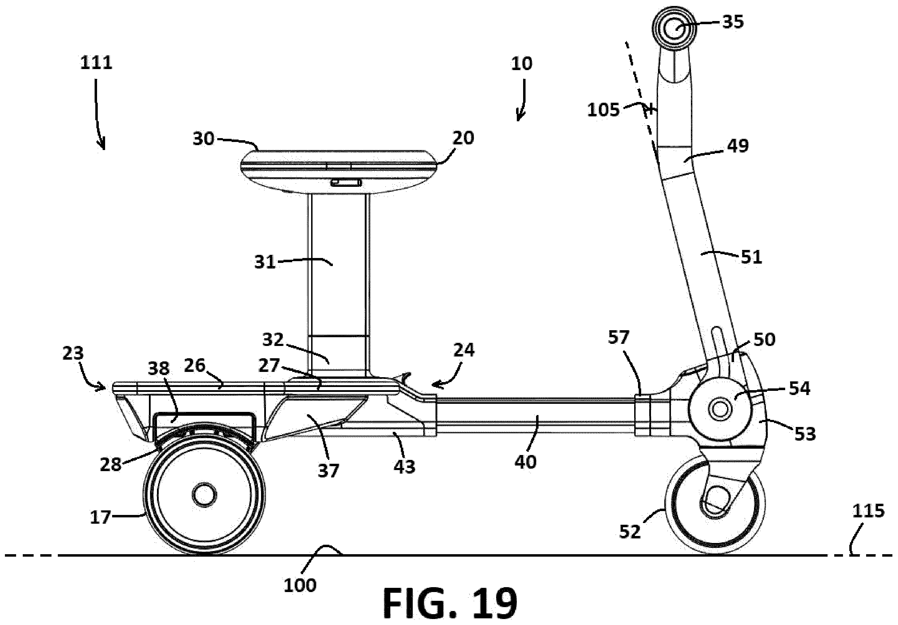

Referring now to the bar-receiving housing 43 as depicted and referenced in FIGS. 6-8, said housing 43 extends along at least a portion of the platform 16 along the symmetry axis 101. In some embodiments, the housing 43 may comprise an inner lumen extending along or in parallel relation to the symmetry axis 101. The housing 43 is open at opposite ends thereof as at openings 44 that face the first platform end 23 and the second platform end 24 of the platform 16. The bar 40 is held by the housing 43 to the underside portion 21 of the platform 16, and is configured to slide relative to the housing 43 so as to move the connector 18 between at least first and second states as generally and comparatively depicted in FIG. 13 versus FIG. 19. In some embodiments, the bar 40 may be telescopic. In some embodiments, the bar may be configured to lock at intermediate positions along the symmetry axis 101 relative to the housing 43, for example via the spring-biased button assemblies 67 and apertures 65 and 69 as described above. In some embodiments, the bar-receiving housing 43 may further comprise a sloped, button-directing formation as at 74. When the bar 40 slides away from the second platform end 24, the sloped, button-directing formation 74 is operable to direct the button 68 nearest the first platform end 23 into an actuated state and travels along the inner surfacing of the bar 40 until aligned with the button-receiving aperture 69. Once aligned with the button-receiving aperture 69, the button 68 nearest the first platform end 23 is spring returned into the button-receiving aperture 69 to lock the bar 40 in the ride-on mode 111 configuration.

When the bar 40 slides in the direction of the second platform end 24 of the platform 16, it distances the head member wheel holder 53 (and thereby the head member 19 and the head member wheel 52) farther away from the first platform end 23 of the platform 16. When reconfiguring the device 10 into the stroller board mode 110, the bar 40 slides in the direction of the first platform end 23 of the platform 16 and pulls the head member wheel holder 53 (and thereby the head member 19 and the head member wheel 52) closer to the first platform end 23 of the platform 16. Once aligned with the button-receiving aperture 69, the button 68 nearest the second platform end 24 is spring returned into the button-receiving aperture 69 to lock the bar 40 in the stroller board mode 110 configuration.

The lowermost point of the head member wheel 52 remains in the reference plane 115 in both the stroller board mode 110 and the ride-on mode 111 of the device 10. When the device 10 is in the second ride-on mode 111, the under-platform wheels 17 constitute rear wheels at the first platform end 23 and the head member wheel 52 constitutes a front wheel adjacent the second platform end 24. In the first or stroller board mode 110 of the device 10, the head member wheel 52 constitutes a rear wheel adjacent the second platform end 24.

In certain embodiments, the connector 18 may comprise a channel or opening 45, which opening 45 may mate with the connector-engageable element of a stroller as exemplified by lower bar 15, portions of which have been generally depicted and referenced at 15 as noted. The opening 45 as depicted defines an axis 104 that extends orthogonally relative to the symmetry axis 101 and in certain embodiments receives the lower bar 15 of a stroller 12 or similar other tow apparatus. The opening 45 extends along axis 104 perpendicular to the symmetry axis 101. In some embodiments, the opening 45 is configured to remain at a fixed orientation at all states of the connector 18.

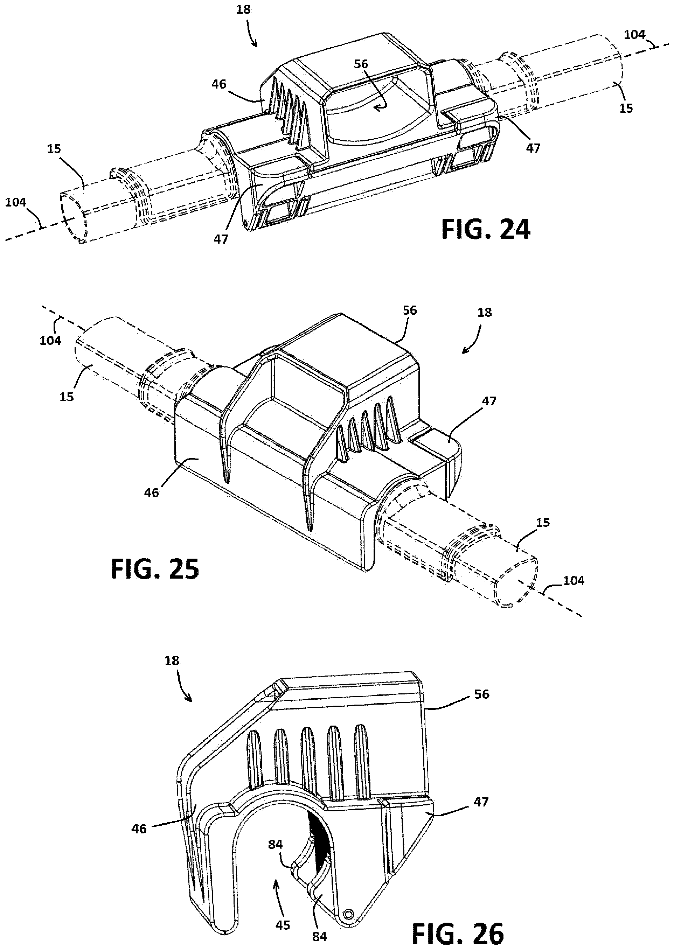

In some embodiments, the connector 18 is positioned at the first bar end 41 of the bar 40. Generally, the connector 18 can be integrally attached, unitarily formed, connected, mounted onto, or otherwise fixedly attached to the first bar end 41 of the bar 40. The connector 18 as variously illustrated in the drawings submitted in support of these specifications extends transversely, optionally perpendicularly, to the bar 40 along the axis 104. The connector is shown in FIG. 13 in a first state wherein the connector 18 is positioned in spaced relation relative the first platform end 23 and is shown in a second state in which the bar 40 is linearly displaced in the direction of the second platform end 24 of the platform 16 such that the connector 18 is held underneath the platform 16 as generally depicted in FIGS. 24 through 26.

As noted, the bar 40 has a first bar end as at 41 and a second bar end as at 42 in FIGS. 22 and 23. The connector 18 is attached or otherwise associated with the first bar end 41. In some embodiments, the first bar end 41 of the bar 40 mates with the bar-receiving mouth 56 formed in the connector main body 46 of the connector 18. Similarly, in some embodiments, the second bar end 42 mates with a bar-receiving mouth 57 formed in the head member wheel holder 53 associated with the second platform end 24, which head member wheel holder 53 is operable to attach the head member 19 to the second platform end 24. The bar 40 is moveable along the symmetry axis 101 via the bar-receiving housing 43 of the central body 37 to bring the connector 18 between a first state in which the connector 18 protrudes from the first platform end 23 of the platform 16, as perhaps best seen in plan views of the device 10, and a second state in which the connector 18 is located closer to the second platform end 24 of the platform 16 than in the first state thereby further linearly displacing the head member wheel holder 53 in a direction away from the second platform end 24.

It is to be understood herein that in some examples, the connector arrangement or connector can be configured to engage or attach to a connector-engageable element of a stroller other than the lower bar 15. For example, the connector arrangement can be configured to engage or connect to a leg of a stroller. In some examples, the axis along which the opening of the connector extends, for example the axis 104 in the above-described example, can be oriented vertically, i.e., perpendicular to the upper plane of platform (or in some examples, obliquely with respect to the platform). In some examples, the connector can be fixed to have the axis along which the opening of the connector extends fixedly to be oriented vertically, i.e., perpendicular to the platform. In some examples, the connector can be manipulable between a connector orientation in which the axis along which the opening of the connector extends horizontally, i.e., parallel to the upper plane of the platform, and a connector orientation in which the axis along with the opening of the connector extends vertically, i.e., perpendicular to the platform. In some examples, the axis along which the opening of the connector extends, for example the axis 104 in the above-described example, can be oriented along the symmetry axis. In some examples, the connector can be fixed to have the axis along which the opening of the connector extends fixedly to be oriented along the symmetry axis. In some examples, the connector can be manipulable between a connector orientation in which the axis along which the opening of the connector extends horizontally and perpendicular to the symmetry axis, and a connector orientation in which the axis along with the opening of the connector extends along the symmetry axis.

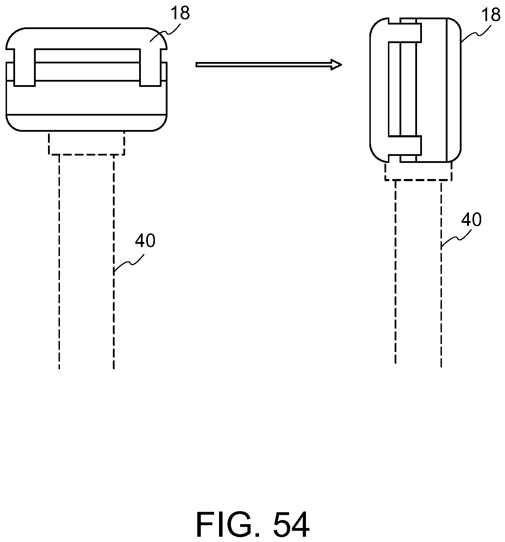

For example, as shown schematically in FIG. 54 (illustrating the connector 18 and a portion of a support bar 40 according to an example of the presently disclosed subject matter), the connector is manipulable between at least two connector orientations, one on the left and one on the right in FIG. 54. In the orientation on the left of Fig. 54, the connector 14 can be connected, for example, to the lower bar 15 of the stroller, and in the orientation on the right of Fig. 54, the connector 14 can be connected, for example, to a leg of the stroller.

It is to be understood herein that in some examples, the connector arrangement can comprise a plurality of connectors. In some examples, one or more connectors of the plurality of connectors can have (or manipulable to have) an orientation different from other connector(s). For instance, one or more connectors of the plurality of connectors can be attachable to a lower bar of the stroller and other connector(s) can be attachable to any other part (for example, a leg) of the stroller. In one state of the connectors (for example, an extended state), the connectors can protrude outwardly from the first platform end at least as seen in a plan view of the device, and in another state of the connectors (for example, a retracted state), the connectors may not protrude outwardly from the first platform end at least as seen in a plan view of the device, i.e., connectors can be positioned wholly under the platform.

In general, the connectors can be connected to the platform at least indirectly. For instance, in some examples, the connectors can be connected to the support bar 40, in a manner similar to as detailed herein above. In some examples, the connectors can be connected directly to the platform. In any case, the connectors can be connected via a connection arrangement suitable to allow manipulation of the connectors between the extended and retracted states. The connection arrangement can include one or more of telescopic mechanism, folding arrangement, sliding arrangement, pivoting mechanism, and equivalents thereof. Further, in any one or more of the examples of the connector arrangement described herein, the connector(s) can be configured to be manually pulled/pushed between the extended and retracted states. In some examples, the connection arrangement (connecting the connectors to the platform) can be spring actuated to be manipulated between the extended and retracted states.

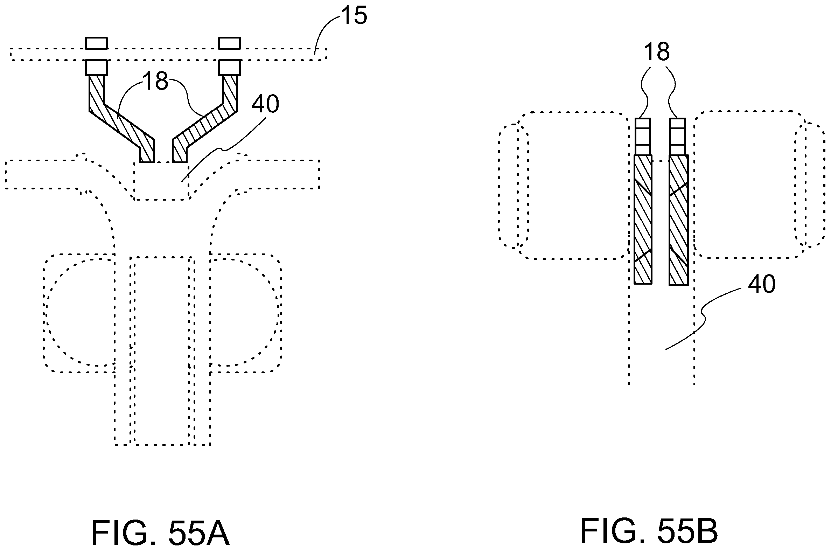

For example, as shown schematically in FIGS. 55A and 55B illustrating two connectors 18 and a portion of a support bar 40 according to an example of the presently disclosed subject matter, the connectors 18 are connected to the support bar 40 and/or are housed inside the support bar itself. The connectors 18 can be manipulated between the extended state (FIG. 55A) and the retracted state (FIG. 55B). In some examples, the connectors can be formed as elastic or spring-biased rods which upon release from the retracted state bounce outwardly from the end of the support bar and optionally split sideways to take spaced apart positions, shown for example in FIG. 55A. A potential advantage of the spaced apart positions may include obtaining a more stable and balanced attachment of the device to the stroller.

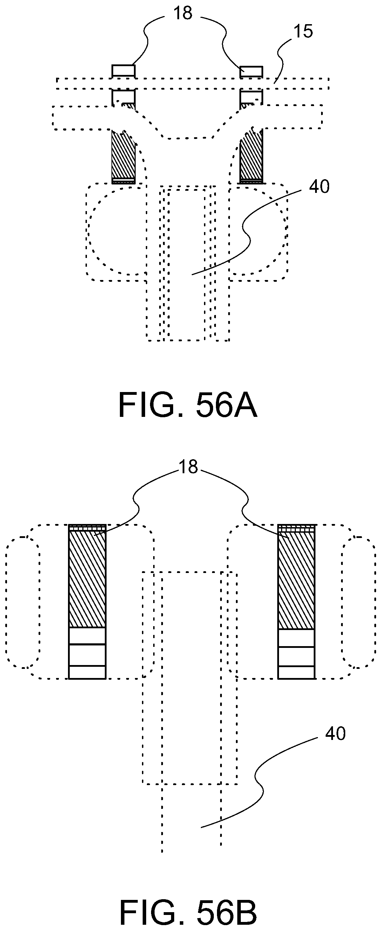

As shown schematically in FIGS. 56A and 56B illustrating two connectors 18 according to an example of the presently disclosed subject matter, the connectors 18 are connected directly to the platform. The connectors 18 can be manipulated between the extended state (FIG. 56A) and the retracted state (FIG. 56B). It is to be understood herein that the connector(s) can be connected directly to the platform even in the examples, in which the device includes only one connector. In some examples, the connectors can be at least partially fitted inside designated recesses in the body of the platform, and then extended per the need (e.g. by being pulled out, spring-bounced, or otherwise caused to selectively protrude) for enabling attachment to het stroller.

Referring now more particularly to the head member wheel holder 53, the head member wheel holder 53 essentially couples the lower end 50 of the head member 19 to both a head member wheel 52, which head member wheel 52 is located substantially below the head member 19, and to the bar 40, which extends transversely to the head member 19 along underside portion 21 via the bar-receiving housing 43 of the platform 16 along symmetry axis 101 of the device 10. In some embodiments, the head member 19 is pivotable relative to the head member wheel holder 53 at laterally opposed and optionally lockable pivot joints defined by head member-to-wheel holder attachment mechanisms 54 that connect head member 19 to the head member wheel holder 53.

The attachment mechanisms 54 can, in some embodiments, selectively lock the head member 19 in the operable state of the ride-on mode 111 or in the non-operable state of the stroller board mode 110 in some embodiments. When the device 10 is transferred or reconfigured into the stroller board mode 110 or to the storage mode 112, the head member 19 can be pivoted about the head member pivot axis 108, which pivot axis 108 extends transversely or optionally, perpendicularly to the bar 40 and the symmetry axis 101. In some embodiments, the head member 19 may be removed from the head member wheel holder 53 when in the stroller board mode 110 or the storage mode 112.

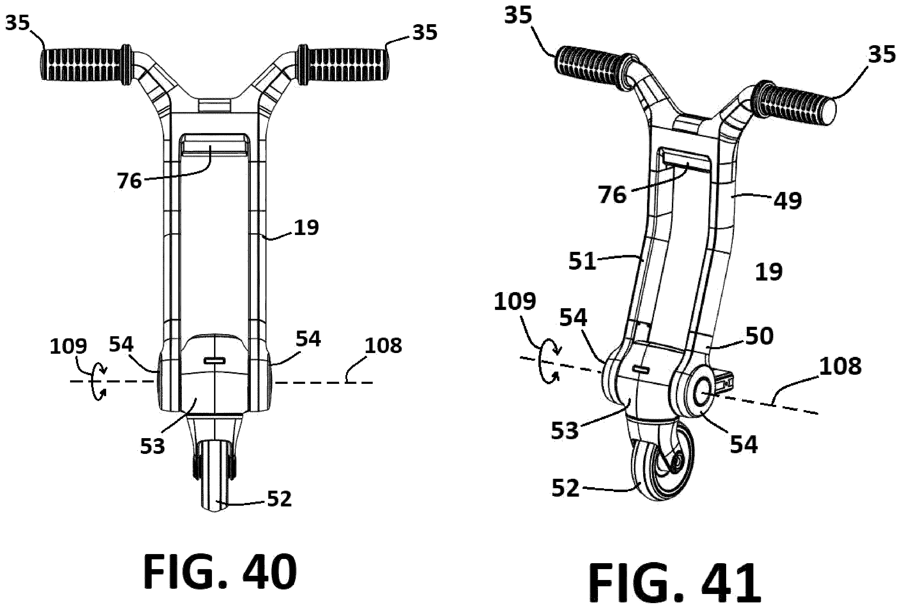

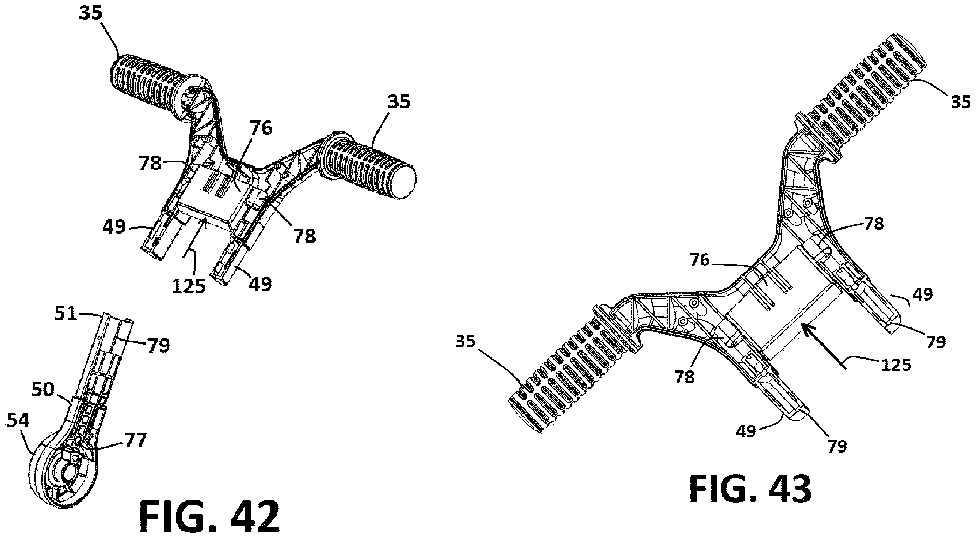

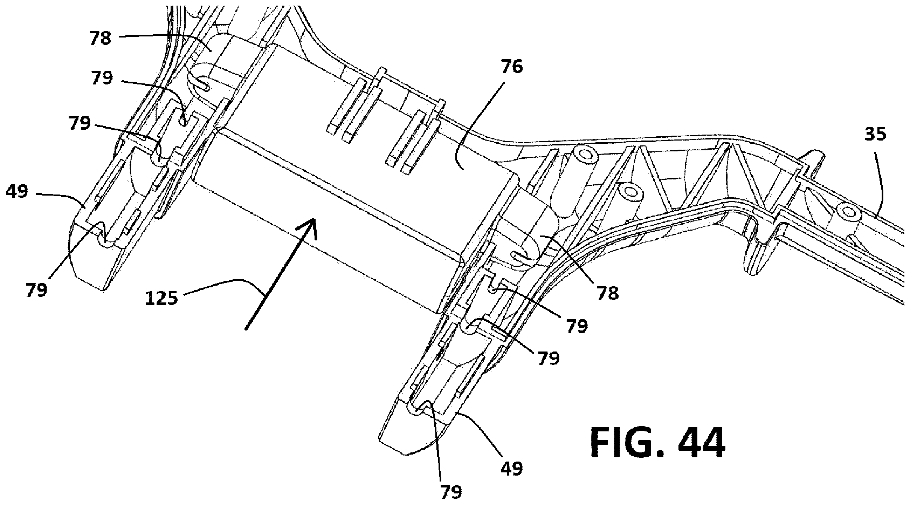

Comparatively referencing FIGS. 40 through 48, the reader will there consider in certain finer detail the head member 19 of certain embodiments. To pivot the head member 19 about the head member pivot axis 108, the head member 19 is outfitted with a handle release mechanism 76 in some embodiments. The handle release mechanism 76 may be directed upwardly as at vector 125 to release internal locking members 77 cooperable with the attachment mechanisms 54. When the handle release mechanism 76 is directed as at vector 125, cables or similar other force transfer mechanisms 83 attached to the handle release mechanism 76 are operable to transfer the directing force 125 to the internal locking members 77 to release the attachment mechanisms 54 and allow the head member 19 to pivot as at 109 about the head member pivot axis 108.

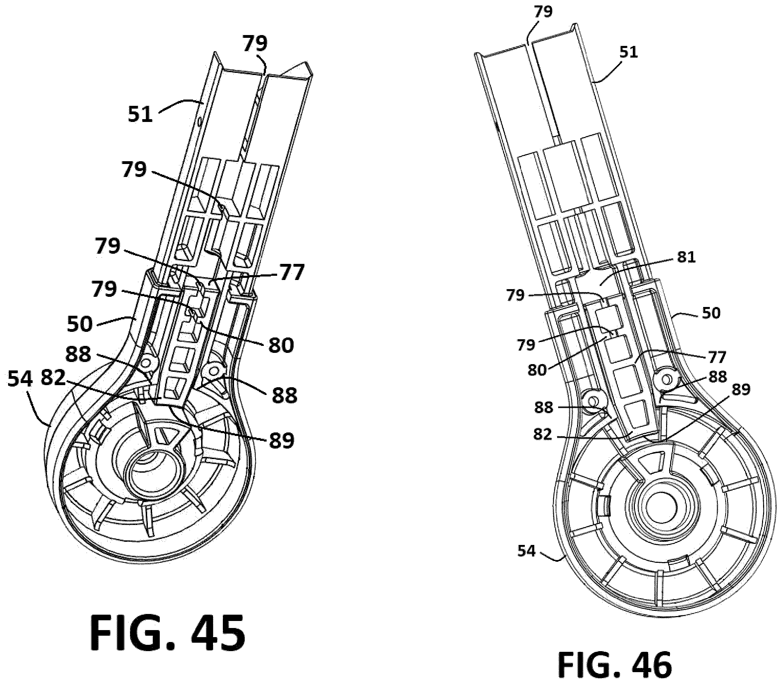

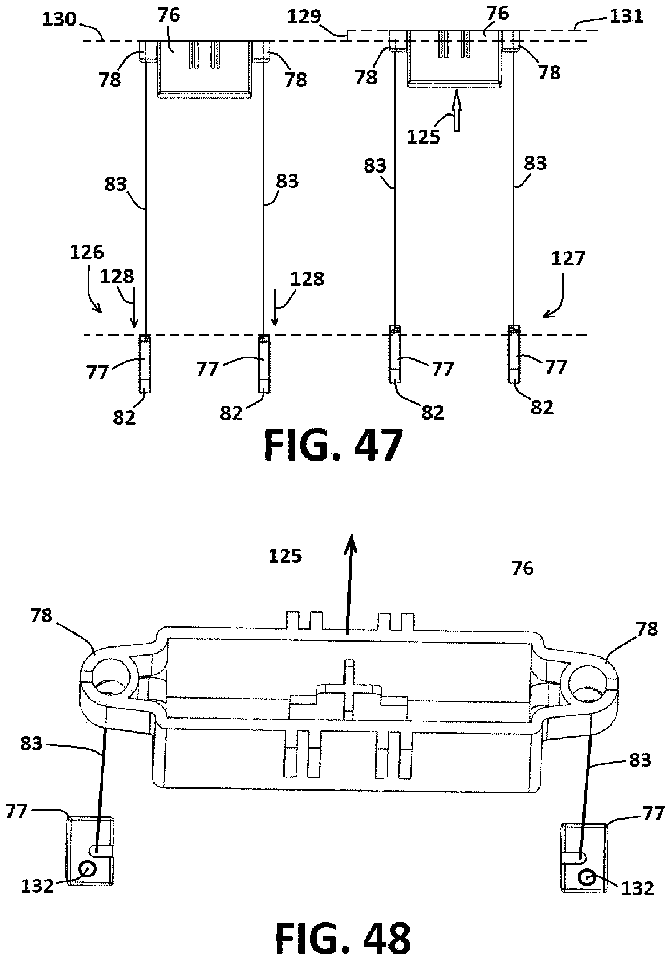

The force transfer mechanisms generically depicted and referenced at 83, characterized by cables in some embodiments, are housed within the elongate portions 51 and extend intermediate laterally opposed anchor structures 78 integrally formed with the handle release mechanism 76 and internal anchor portions 80 of the internal locking members 77. Channels as at 79 are formed in the internal portions of the elongate portions 51 so to allow movement of the force transfer mechanisms 83 therethrough. In some embodiments, the internal locking members 77 may comprise member return means as exemplified by spring elements to return as at vector 128 the internal locking members 77 into a head member locking configuration 126 as generally depicted in FIGS. 45 through 47. The head member release configuration is generally depicted and referenced at 127 in FIG. 47.

The internal locking members 77 each have a tip portion as at 82 having a depth substantially equal in depth to a space 81 formed above the internal locking members 77 into which upper portions of the internal locking members 77 are received when directed via the handle release force 125 into the head member release configuration 127. These depths are substantially equal to the displacement distance 129 between the head member locking configuration 126 of the handle release mechanism 76 and the head member release configuration 127 of the handle release mechanism 76. The displacement distance 129 extends between a locking configuration plane 130 and a release configuration plane 131 of the handle release mechanism 76. FIG. 48 shows the handle release force 125 angled as compared to the vectors 132 directed out of the page to show directed movement of the internal locking members 77 relative to the handle release mechanism 76 in some embodiments.

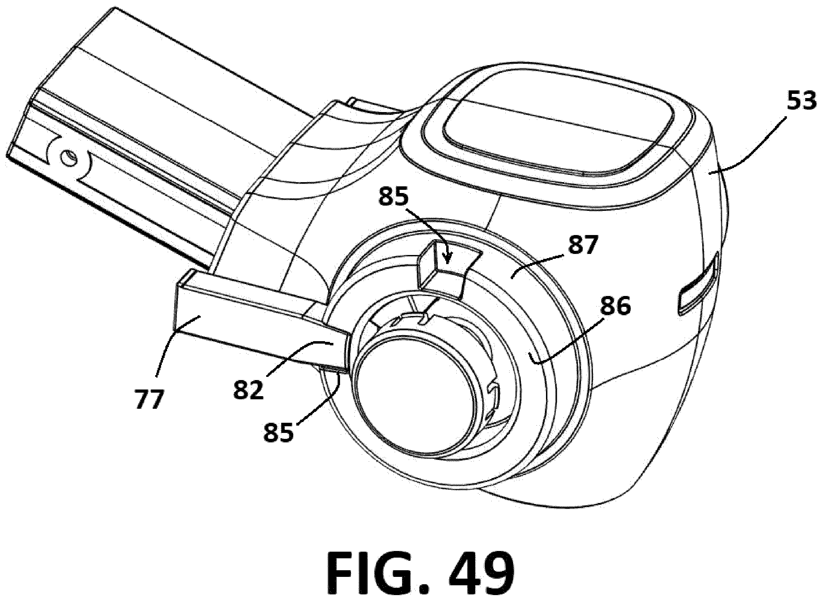

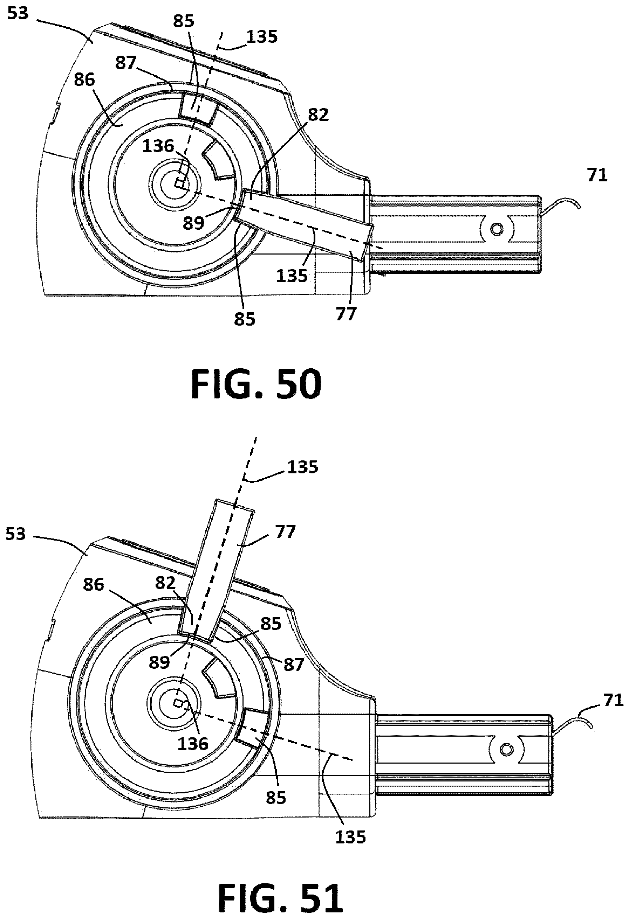

In some embodiments, the internal locking members 77 mate with or are received in slot formations 85 formed at laterally opposed radial hub structures 86 at external surfacing of the head member wheel holder 53 in some embodiments as generally depicted and referenced in FIGS. 49 - 51. The slot formations 85 are configured to enable the head member 19 to pivot about the pivot axis 108 so as to enable (a) the stroller board mode 110 as generally depicted in FIGS. 49 and 50, and the ride-on mode 111 as generally depicted in FIG. 51. Comparatively referencing FIGS. 49 - 51, the reader will there see the slot formations 85 on a single radial hub structure 86 each have an axis 135, which axes are angled roughly 90 degrees as at angle 136 relative to one another. In some embodiments, the head member 19 rotates through an angle of roughly 270 degrees intermediate the stroller board or ride-on modes 110/111. Together the slot formations 85 and the internal locking members 77 are operable to retain the head member 19 in either of the stroller board or ride-on modes 110/111.

The reader will recall the internal locking members 77 each have a tip portion 82. When the tip portions 82 are withdrawn into the head member release configuration 127, the tip portions 82 correspondingly withdraw from engagement with the slot formations 85 at the radial hub portion 86 thereby allowing the outer radial surface 87 to rotate past the tip portion 82 and allow pivotal motion at the attachment mechanisms 54. In other words, the tip surface 89 retracts so as to become flush with the flanking structures 88 of the attachment mechanisms 54 thereby enabling the outer radial surface 87 to pass freely radially inwardly under or by the tip surface 89 thereby allowing pivotal motion 109 of the head member 19 about the pivot axis 108. It will thus be seen the head member 19 is foldable or pivotable in some embodiments from an uprightly raised position in the operable state or second ride-on mode 111 to a lowered position or non-operable state of the first stroller board mode 110. When in the lowered position of the non-operable state, at least a part of the elongate portion 51 extends along the platform 16. Further, when in the lowered position, at least a part of the elongate portion 51 and the handlebars 35 are located under the platform 16 in some embodiments. The head member 19 is connected at least indirectly to the second bar end 42 by way of the head member wheel holder 53. In some embodiments, the head member wheel 52 is held by the head member wheel holder 53 by means of which the head member 19 is connected to the second bar end 42 of the bar 40. In some embodiments, when the head member 19 is in the non-operable state, the elongate portion 51 is at least partially aligned along or in parallel relation to the symmetry axis 101.

In some embodiments, the bar-receiving housing 43 may be attached to or located at the underside 21 of the platform 16 for holding the bar 40 to the platform 16. As illustrated, the bar-receiving housing 43 is integrally formed with central body 37. In some embodiments, the bar-receiving housing 43 has openings 44 in the directions of the first platform end 23 and the second platform end 24 through which openings 44 at least a part of the bar 40 protrudes. In some embodiments, the bar 40 is configured to slide with respect to the bar-receiving housing 43. In some embodiments, movement of the bar 40 with respect to the bar-receiving housing 43 in the direction of the second platform end 24 is configured to space the head member 19 further away from the second platform end 24 along the symmetry axis 101 as generally depicted in FIG. 19, for example.

The head member 19 is generally associated with the second platform end 24 of the platform 16 at least in the ride-on mode 111 of the device 10. The head member 19 includes an upper end 49, a lower end 50, and an elongate portion 51 therebetween. The upper end 49 is associated with the handlebars 35, and the lower end 50 is associated with the head member wheel 52, which is also configured to roll along the ground surface 100. The head member 19 can be configurable, for example by folding or pivoting about the pivot axis 108, between an operable state in which the head member 19 is in an uprightly raised position and the handlebars 35 are accessible for grasping as in the ride-on mode 111; and a non-operable state in which the head member 19 is in a lowered, stowed position as in the stroller board mode 110. Optionally, at the lowered position, the head member 19 may extend at least partially under or along the platform 16 in some embodiments. Optionally, in other embodiments, the head member 19 may be removably connected to the device 10, and can be detached when transferring the device 10 into the stroller board mode 110 and/or into the storage mode 112, as described in detail further below.

In the lowered or stored position as generally depicted in FIGS. 1A, 1C, 1E, 2A, 2B, 10 - 16, at least a part of the elongate portion 51 and the handlebars 35 are located under the platform 16 at the underside portion 21. In some embodiments, the handlebars 35 are obliquely angled relative to the elongate portion 51 as at oblique angle 105 referenced in FIG. 19. In the shown example, elongate portion 51 is non-linear and slightly bent, having an oblique angle as at 105, for example between 5 and 30 degrees. A corresponding angle between 150 and 175 degrees extends between the elongate portion 51 and the handlebar portion of the handlebars 35 in some embodiments. In other embodiments, the elongate portion 51 can be straight or linear between the lower end 50 and the handlebars 35. In some embodiments, the handlebar portion may be coplanar with an upper portion of the elongate portion 51 while the lower end 50 may be angled relative to the elongate portion 51 as generally depicted in FIGS. 1B and 1D.

In some embodiments, the head member 19 is connected at least indirectly to the second bar end 42 by way of the head member wheel holder 53. In some embodiments, the head member wheel 52 is also held by the head member wheel holder 53, by means of which the head member 19 is also connected to the second bar end 42 of the bar 40. The linearly displaceable movement of the bar 40 with respect to the bar-receiving housing 43 in the direction of the second platform end 24 is configured to space the head member 19 further away from the second platform end 24, along the symmetry axis 101 as may be required by the child user 11. In some embodiments, the head member 19 is pivotable relative to the head member wheel holder 53, between the operable state and the non-operable state. It is contemplated that in some embodiments, the head member 19 may be configured to attach to or adjacent the first platform end 23 of the platform although not specifically illustrated in the drawings submitted in support of these specifications.

In some embodiments, the non-operable state of the head member 19 is characterized by the elongate portion 51 being at least partially aligned along the symmetry axis 101 in parallel relation thereto. In some embodiments, the elongate portion 51 is forked or characterized by parallel spaced portions having a recess 58 or space therebetween in which the bar-receiving housing 43 is at least partially received when the head member 19 is in the non-operable state as generally and comparatively depicted in FIG. 12 versus FIG. 23. In some embodiments, the handlebars 35 of the head member 19 in the non-operable state at least partially cover the under-platform wheels 17 when the respective wheel holders 28 are folded or pivoted into the stroller board mode 110, thereby preventing the wheel holders 28 from being unfolded in the first or stroller board mode 110 of the device 10. In this regard, the reader may wish to further reference FIG. 12. In some embodiments, it will be recalled the device 10 may comprise one or more attachment mechanisms 54 located at the head member wheel holder 53 configured to electively lock the head member 19 in the operable state or in the non-operable state.

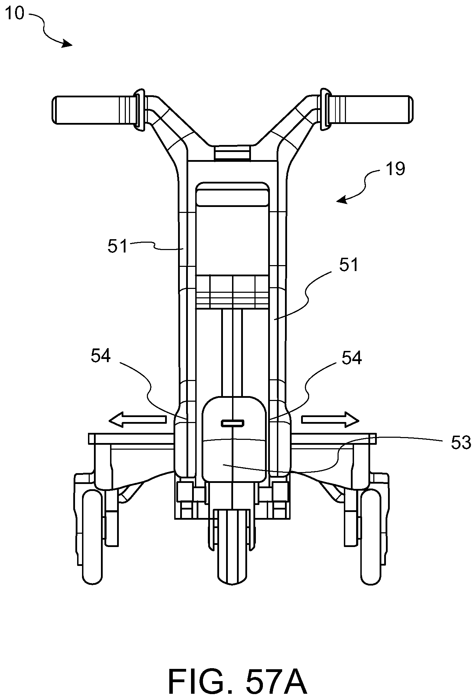

In some embodiments, the head member 19 may be removably connected to the device 10 and can be detached when transferring the device 10 into the stroller board mode 110 and/or into the storage mode 112. In general, the head member 19 can be connected to the device 10, for example at the head member wheel holder 53, for example a head member-to-wheel holder attachment mechanism. In some examples, the head member-to-wheel holder attachment mechanism can be the head member-to-wheel holder attachment mechanism 54 as described above. As illustrated in FIG. 57A, and as can also be seen in FIG. 23, head member-to-wheel holder attachment mechanism 54 comprises two attachment elements 54 each associated with one of the elongate portions 51 of the head member 19. Each of the attachment elements 54 can be detachably attached to the head member wheel holder 53. In some examples, the head member 19 can be detached by displacing the attachment elements 54 outwardly from the head member wheel holder 53, as shown in FIG. 57A. Optionally, a spring-loaded mechanism is provided so that elements 54 can be pushed inwardly to spring-release the head member from the head member wheel holder 53.

In some examples, the head member 19 can be attached (after being detached) to the head member wheel holder 53 in the non-operable state for manipulating the device into its stroller board mode and/or storage mode. Optionally, the head member is attached under the platform.

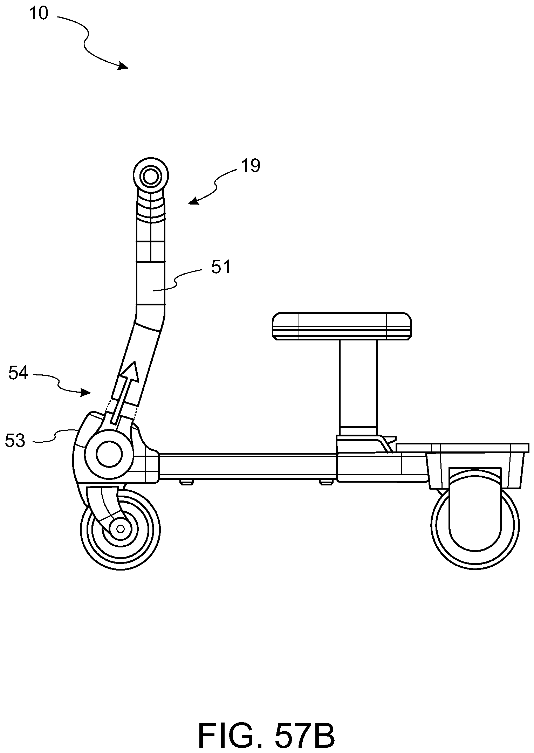

In some examples, a head member-to-wheel holder attachment mechanism can include a snug-fit and/or snap-fit mechanism. For instance, the head member wheel holder 53 can comprise a head member receiving portion and at least a part of the head member, for example the elongate portion, can be received into the head member receiving portion. The head member receiving portion can be connected to the head member receiving portion by a snug-fit arrangement and/or a snap-fit arrangement. For example, as shown in FIG. 57B, the head member wheel holder 53 comprises the head member receiving portion formed as a recess. The head member 19 comprises an elongate portion, a bottom part of which is received into the head member receiving portion, which can be locked therewithin by snug-fit and/or snap-fit arrangement. The head member receiving portion and the bottom part of the elongate portion constitute a head member-to-wheel holder attachment mechanism.

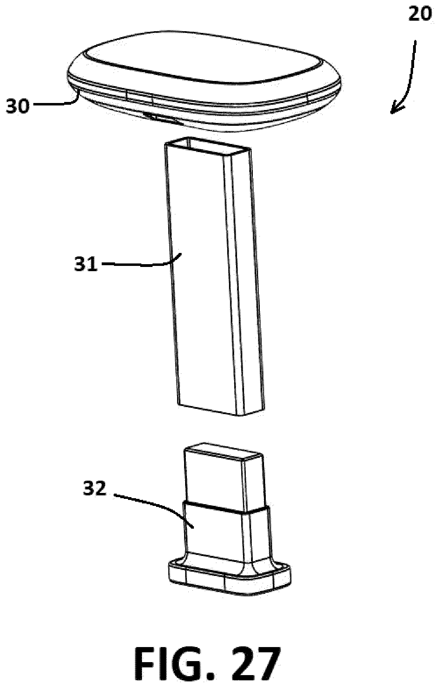

The seat unit 20 essentially comprises a seat 30, a post 31, and a seat-connector 32 as generally depicted and referenced in FIG. 27. The seat 30 is configured to mate with the post 31, and the post 31 is configured to mate with the seat-connector 32 in some embodiments. The seat-connector 32 is configured to mate with a seat-connector-receiving aperture 33 formed in the platform 16 at the second platform end 24 in some embodiments. Further, in some embodiments, the seat unit 20 is configured to be selectively connected to the platform 16 by a quick-release mechanism and is configured to protrude upwardly from the platform 16 when connected thereto. The seat unit 20 and the seat 30 thereof can thus be selectively connected to the platform 16, protruding upwardly therefrom, so as to enable a child user 11 to selectively sit upon the device 10 or stand upon the device 10 as the child user 11 may elect.

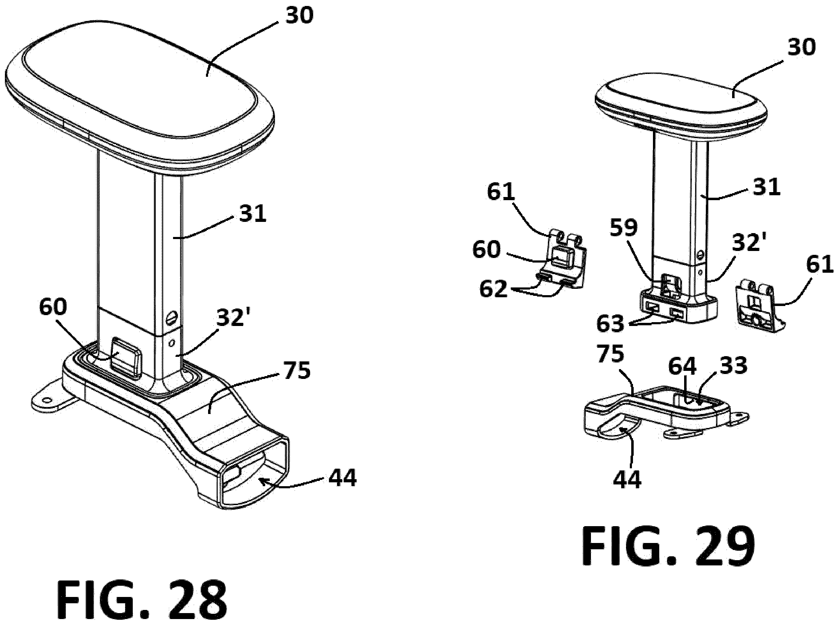

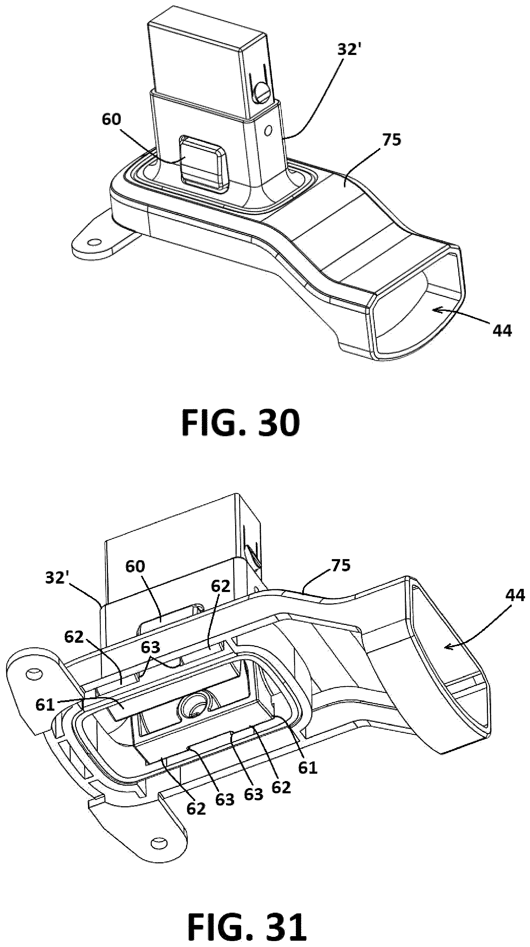

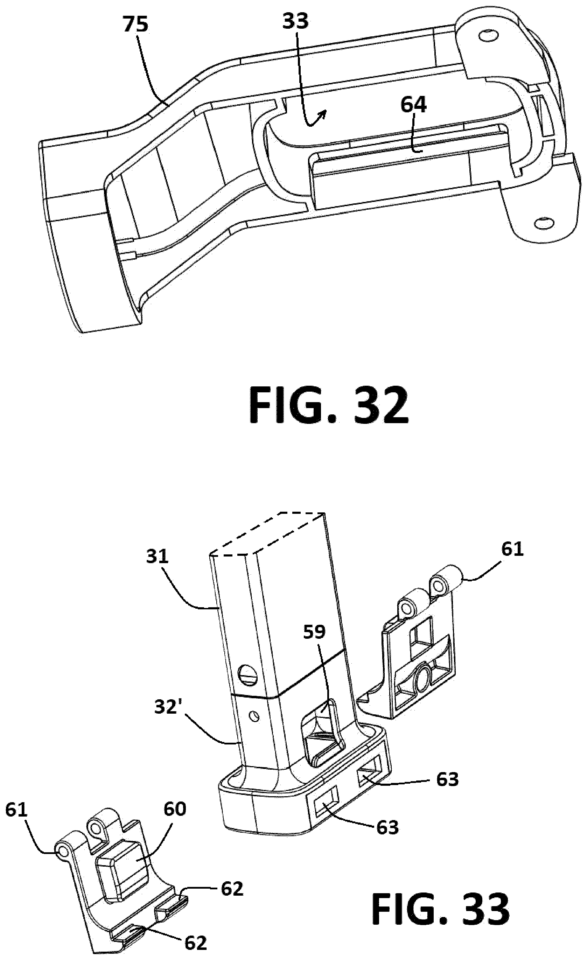

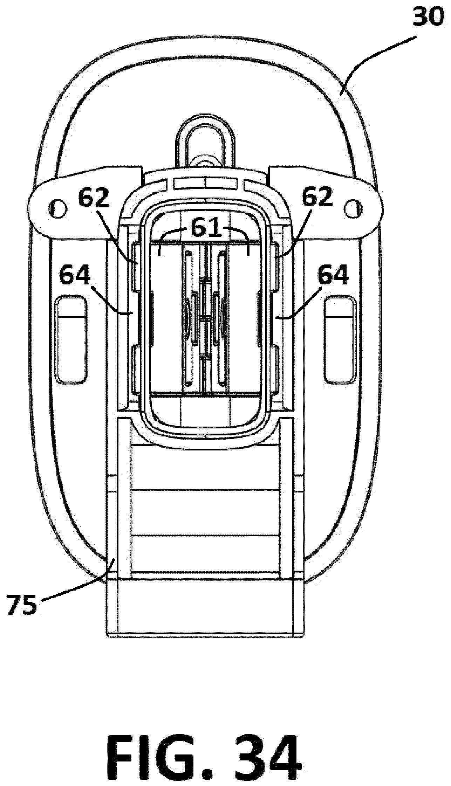

In some embodiments, the seat unit 20 may be selectively removed and attached to the platform 16 by way of a second quick release mechanism. In this regard, the reader is directed to FIGS. 28 through 34. Comparatively referencing FIGS. 28 through 34 the reader will there consider an apertured seat-connector 32'. Apertured seat connector 32' comprises laterally opposed upper apertures 59, which upper apertures 59 receive quick release buttons 60 formed on quick release bodies 61 received internally relative to the apertured seat connector 32'. The quick release bodies 61 are spring-biased in some embodiments, and further comprise at least one, but in some embodiments a pair of laterally extending protuberances 62 that are received by and mate with lower apertures 63 formed at lower portions of the quick release bodies 61.

The protuberances 62 extend through the lower apertures 63 and engage laterally opposed structures 64 formed internally on the connector anchor portion 75 of the bar-receiving housing 43. By pressing inwardly on the buttons 60, the protuberances 62 of opposing bodies 61 are displaced toward one another thereby disengaging the structures 64 and enabling the user to remove the seat unit 20 from the connector anchor portion 75 of the bar-receiving housing 43. When reattaching the seat unit 20 to the connector anchor portion 75 of the bar-receiving housing 43, the buttons 60 may be pushed inwardly and the apertured seat post 32' may be inserted into the seat-connector-receiving aperture 33 formed in the connector anchor portion 75 of the bar-receiving housing 43. The spring-biased bodies 61 then return the protuberances 62 into engagement with the structures 64 to hold the seat unit 20 in assembled relation with the connector anchor portion 75 of the bar-receiving housing 43.

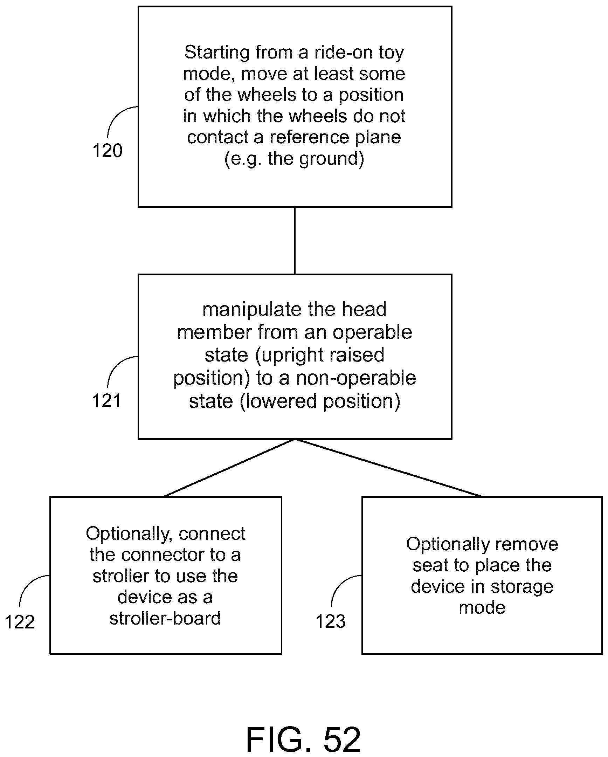

As earlier described, the device 10 according to the presently disclosed subject matter is configurable between several modes of operation, including a first stroller board mode as at 110; a second ride-on (toy) mode as at 111; and optionally, a third storage mode as at 112. The presently disclosed subject matter contemplates certain summarizing mode reconfiguration methodology supported by these specifications. Assuming, for example, a child user 11 is firstly utilizing the device 10 in the ride-on mode 111, and the parent or caretaker wishes to attach the device 10 to a stroller 12 or similar other tow apparatus, a user may firstly move at least some of the under-platform wheels 17 to a position in which the under-platform wheels 17 do not contact or are removed from the reference plane 115, which, when in the ride-on mode 111, otherwise coincides with a ground or support surface 100. The reconfiguration of under-platform wheels 17 to the stowed configuration is generally described and referenced at box 120 in FIG. 52.

After reconfiguring the under-platform wheels 17 to the stowed configuration, the user may then manipulate the head member 19 from an operable ride-on state or configuration in which the head member 19 extends uprightly raised from the platform 16, to a non-operable or stroller board state or configuration in which the head member 19 is moved (e.g., folded ,pivoted, or detached and then reconnected to the undersurface of the platform) to a lowered position. This reconfiguration is generally described and referenced at box 121 in FIG. 52. Once the under-platform wheels 17 and head member 19 are reconfigured into the stroller board mode 110, the user may then connect the device 10 to a stroller 12 or similar other tow apparatus as at box 122, or remove the seat unit 20 and collapse the device 10 into the storage mode 112 as at box 123 in FIG. 52. In some examples, the sequence of these events may be reversed. In some examples, these events may be performed in any order.

## Claims

1. A device configurable between a first mode in which the device can be connected to a stroller as a stroller board, and a second mode in which the device can be used as an independent ride-on toy, the device comprising:
a platform having an underside portion, an upper surface, a first platform end and a second platform end, and a symmetry axis oriented horizontally in both the first and second modes of the device, the first and second platform ends being spaced along the symmetry axis;
at least two under-platform wheels at least indirectly connected to the underside portion of the platform, each of the under-platform wheels being operable to roll along a ground surface in at least one of the first and second modes;
a connector engageable with a stroller, and protruding, in at least a first state of the connector, outwardly from the first platform end; and
a head member having an upper end, a lower end and an elongate portion therebetween, the head member protruding, at least in a plan view, from the second platform end at least in the second mode, the upper end being associated with handlebars and the lower end being associated with a head member wheel, the head member being configurable between an operable state in which the elongate portion extends transversely to the platform and the handlebars are accessible for use of the device in the second mode, and a non-operable state, in which the elongate portion and the handlebars are located so as to least interfere with use of the device in the first mode; a location of the elongate portion and the handlebars in the non-operable state being different than that of the operable state.

2. The device according to claim 1, wherein the head member is manipulable from an uprightly raised position in the operable state to a lowered position in the non-operable state; wherein in the lowered position at least a part of the elongate portion and the handlebars are located under the platform.

3. The device according to claim 1 or claim 2, further comprising a bar attached at least indirectly to the underside of the platform and extending along at least a majority of the platform length along the symmetry axis, the bar having a first bar end and a second bar end.

4. The device according to claim 3, wherein the connector is associated with the first bar end; and wherein the bar is moveable along the symmetry axis to bring the connector between a first state in which the connector protrudes from the first end of the platform, as seen in a plan view of the device, and a second state in which the connector is located closer to the second platform end of the platform than in the first state.

5. The device according to claim 3 or claim 4, wherein the head member is connected at least indirectly to the second bar end.

6. The device according to any one of claims 3 through 5, further comprising a housing attached to the underside of the platform for holding the bar to the platform, the housing having openings in the directions of the first and second platform ends, through which at least a part of the bar protrudes; the bar being configured to slide with respect to the housing; wherein movement of the bar with respect to the housing in the direction of the second platform end is configured to space the head member further away from the second platform end, along the symmetry axis.

7. The device according to claim 5, wherein the head member wheel is held by a head member wheel holder, by means of which the head member is connected to the second bar end; wherein the head member is pivotable relative to the head member wheel holder, between the operable state and the non-operable state.

8. The device according to any one of the preceding claims, further comprising a seat unit configured to be selectively connected to the platform by a quick-release mechanism, the seat unit configured to protrude upwardly from the platform when connected to the platform.

9. The device according to any one of the preceding claims, wherein the platform narrows in the direction of the second platform end, and comprises a wide portion adjacent the first platform end.

10. The device according to any one of the preceding claims, wherein the connector comprises a main body formed with an opening which extends along an axis perpendicular to the symmetry axis, the opening shaped to fit onto a low bar of a stroller.

11. A device configurable between a first mode in which the device can be connected to a stroller as a stroller board and a second mode in which the device can be used as an independent ride-on toy, the device comprising:
a platform having an underside portion, an upper surface, a first platform end and a second platform end, and a symmetry axis oriented horizontally in both the first and second modes of the device, the first and second platform ends being spaced along the symmetry axis;
at least two under-platform wheels connected to the underside portion of the platform so as to be capable of being brought between an operational state, in which the lowermost points of the wheels define a reference plane of the device and in which the under-platform wheels can be rolled along a ground surface in the second mode of the device, and a non-operational state in which the under-platform wheels are located above the reference plane in the first mode of the device;
a connector engageable with a stroller, and protruding, in at least a first state of the connector, outwardly from the first platform end; and
a head member having an upper end and a lower end and an elongate portion therebetween, the head member protruding, at least in a plan view, from the second platform end of the platform at least in the second mode of the device, the upper end being associated with handlebars and the lower end being associated with a head member wheel whose lowermost point remains in the reference plane in both modes of the device.

12. The device according to claim 11, wherein the head member is manipulable between an uprightly raised position in which the elongate portion extends transversely to the platform and the handlebars are accessible for use of the device in the second mode, and a lowered position, in which the elongate portion and the handlebars are located so as to least interfere with use of the device in the first mode.

13. The device according to claim 11 or claim 12, wherein each of the under-platform wheels extends along a plane which forms with the reference plane a first angle when the under-platform wheels are in the operational state and a second angle when the under-platform wheels are in the non-operational state, the first angle being greater than the second angle, optionally, the first angle being 90 degrees and the second angle being in the range of 0 - 45 degrees.

14. The device according to claim 12, wherein in the lowered position at least a portion of the head member is positioned to cover the under-platform wheels when said wheels are in the non-operational state.

15. A device configurable between a first mode in which the device can be connected to a stroller as a stroller board, and a second mode in which the device can be used as an independent ride-on toy, the device comprising:
a platform having an underside portion, an upper surface, a first platform end and a second platform end, and a symmetry axis oriented horizontally in both the first mode and the second mode of the device, the first and second platform ends being spaced along the symmetry axis; the platform as seen in a plan view, having a wide portion adjacent the first platform end, and a narrow portion adjacent the second platform end; the platform being configured to be at least indirectly connected to the stroller at the first platform end;
at least two under-platform wheels at least indirectly connected to the underside portion of the platform and associated with the first platform end, each under-platform wheel being operable to roll along a ground surface in at least one of said modes;
a seat unit connectable to the platform at the second platform end, so as to protrude upwardly from the platform, at least in the second mode; and
a head member having an upper end, a lower end and an elongate portion therebetween protruding from the second platform end in at least in the second mode, the upper end being associated with handlebars and the lower end being associated with a head member wheel;
wherein in a plan view of the device, and at least in the second mode, spaces are located externally to diagonal axes whereby each diagonal axis extends between a center point of the seat and a respective end point of the wide portion of the platform which is farthest from the first platform end, said spaces being free of any device elements including the platform.

16. The device according to claim 15, wherein a width of the wide portion of the platform, perpendicular to the symmetry axis, is at least 30 centimeters.

17. The device according to claim 15 or claim 16, wherein the wide portion of the platform extends along at least 50% of a length of the platform as measured along the symmetry axis.

18. The device according to any one of claims 15 through 17, wherein at least adjacent the second platform end, the narrow portion extends in a direction perpendicular to the symmetry axis no more than 50% of a length of the wide portion as measured along a direction perpendicular to the symmetry axis.

19. The device according to any one of claims 15 through 18, wherein the narrow portion tapers in the direction of the second platform end.

20. A device configured to be removably attached to a stroller to serve as a stroller board, the device comprising:
a platform having an underside portion, an upper surface, a first platform end and a second platform end, and a symmetry axis oriented horizontally, the first and second platform ends being spaced along the symmetry axis; the platform being shaped to accommodate both feet of a child user thereon;
a seat unit removably connected to the platform and protruding upwardly from the platform;
a bar attached at least indirectly to the underside of the platform and extending along at least a majority of the platform length along the symmetry axis, the bar having a first bar end and a second bar end;
a connector for removably connecting the device to the stroller, the connector associated with the first bar end, the connector configured to protrude, in at least a first state of the connector, outwardly from the first platform end at least as seen in a plan view of the device; and
a wheel at least indirectly connected to the platform adjacent the second end of the platform.

21. The device according to claim 20, further comprising a housing attached to the underside of the platform for holding the bar to the platform, the housing having openings in the directions of the first and second platform ends, through which at least a part of the bar protrudes; the bar being configured to slide with respect to the housing to move the connector between at least the first state in which the connector protrudes outwardly from the first platform end, and a second state in which the connector is located beneath the platform.

22. The device according to claim 20 or claim 21, wherein the connector comprises an opening which extends along an axis perpendicular to the symmetry axis, the opening configured to fit onto a lower bar of the stroller.

23. The device according to any one of claims 20 through 22, wherein the bar and the connector are configured to move together as a single unit along the symmetry axis.
